# EUROPÄISCHE PATENTSCHRIFT

(11) **EP 0 653 078 B1**
(45) Veröffentlichungstag und Bekanntmachung des Hinweises auf die Patenterteilung: **18.11.1998**
(21) Anmeldenummer: 93917725.9
(22) Anmeldetag: 02.08.1993
(51) Int. Cl.: G05B 13/02, G05B 23/02, G21D 3/00

(54) **VERFAHREN UND LEITTECHNISCHES SYSTEM ZUM STEUERN, ÜBERWACHEN UND REGELN INSBESONDERE VON KOMPLEXEN INDUSTRIELLEN PROZESSEN, WIE Z.B. IN EINEM KERNKRAFTWERK**
METHOD AND PROCESS CONTROL SYSTEM FOR CONTROLLING, MONITORING AND REGULATING IN PARTICULAR COMPLEX INDUSTRIAL PROCESSES, SUCH AS FOR EXAMPLE IN A NUCLEAR POWER STATION
PROCEDE ET SYSTEME DE COMMANDE AUTOMATIQUE POUR GERER, CONTROLER ET REGULER NOTAMMENT DES PROCESSUS INDUSTRIELS COMPLEXES COMME IL EN EXISTE PAR EXEMPLE DANS UNE CENTRALE NUCLEAIRE

(30) Priorität: 01.08.1992 DE 4225469; 01.12.1992 DE 4240242
(43) Veröffentlichungstag der Anmeldung: 17.05.1995
(73) Patentinhaber: SIEMENS AKTIENGESELLSCHAFT, 80333 München (DE); SIMON, Lothar, 90403 Nürnberg (DE)
(72) Erfinder: SIMON, Lothar, D-90482 Nürnberg (DE); ERDMANN, Jochen, D-90522 Oberasbach (DE)
(74) Vertreter: Epping, Wilhelm, Dr.-Ing.
(86) Internationale Anmeldenummer: EP9302057
(87) Internationale Veröffentlichungsnummer: WO9403847

(56) Entgegenhaltungen:
- EP-A- 0 280 553
- EP-A- 0 377 736
- EP-A- 0 401 816
- WO-A-89/03092
- WO-A-90/15391

## Beschreibung

Die Erfindung betrifft ein Verfahren zum Steuern, Überwachen und Regeln eines Prozesses in einer industriellen Anlage, insbesondere eines komplexen industriellen Prozesses, wie Betriebsführung in einer Störfallsituation bei einem Kernkraftwerk.

Ein solches Verfahren ist von besonderer Bedeutung für komplexe industrielle Prozesse und zugehörige komplexe Anlagen. Es ist von großem Nutzen zum Beispiel beim Betrieb eines Kernkraftwerkes, insbesondere im Verlauf von Störfallsituationen, aber z.B. auch bei "Instandhaltungsmaßnahmen" (DIN 31051) in Kernkraftwerken, wie bei der "Inbetriebnahme", "Wartung", "Instandsetzung" etc.

Die Erfindung betrifft auch ein leittechnisches System mit Anzeigeeinrichtung zum Steuern, Überwachen und Regeln eines Prozesses in einer industriellen Anlage, insbesondere eines komplexen industriellen Prozesses, wie einer Betriebsführung in einer Störfallsituation bei einem Kernkraftwerk, unter Verwendung wenigstens eines digitalen Computers, durch dessen Rechenprogramm sogenannte Automaten gebildet werden.

In WO-A-89/03092 ist ein Expertensystem zur Regelung eines industriellen Prozesses beschrieben. Die Regelung erfolgt dabei automatisch sowohl über einen niederen Regelprozeß als auch über einen höheren Regelprozeß. Der höhere Regelprozeß hat Zugriff auf eine Datenbank, in der die Prozeßdaten des niederen Regelprozesses und Meßdaten gespeichert sind. Der höhere Regelprozeß steht mit sämtlichen Prozessen des niederen Regelprozesses in Verbindung. Der höhere Regelprozeß speichert seine sämtlichen Aktionen ab und stellt diese einem Operateur zur Verfügung. Es werden dabei dem Operateur lediglich Informationen zur Verfügung gestellt, die auf aktuellen und vergangenen Meßwerten sowie auf vergangenen Aktionen des höheren Regelprozesses beruhen. Bei der Regelung des Prozesses werden vom Operateur durchgeführte Aktionen nicht berücksichtigt.

In der EP-A-0 401 816 ist eine Methode zur Unterstützung der Führung einer industriellen Anlage beschrieben, bei der eine Historie über die Fehlererkennung erstellt und eine geeignete Gegenmaßnahme angezeigt werden. Dabei wird nicht auf zur Führung der Anlage verwendete Automaten eingewirkt.

Aus der WO-A-90/15391 ist eine digitale Rechenanlage zur Überwachung und Führung eines industriellen Prozesses bekannt. Dort werden aus Prozeßparametern Antwortsignale zur Steuerung des Prozesses gewonnen. Es werden ausschließlich aktuelle oder früher aufgezeichnete Sensorsignale verwendet. Es wird nicht eine Aktionshistorie mit der aktuellen Situation des Prozesses verglichen.

Bekanntlich erfordern Steuerung, Überwachung oder Regelung komplizierter industrieller Anlagen hochkomplizierte Sensor- und Regelungstechnik (automatische Agenten bzw. Automaten), die von hochqualifizierten menschlichen Experten (Operateuren) überwacht wird. Insbesondere bereitet bei solch komplizierten Tätigkeiten die präzise Vorhersage, wie sich der Zustand der Anlage über die Zeit verändert und wie er auf äußere Eingriffe (Aktivitäten) reagiert, in der Regel enorme Schwierigkeiten. Vor allem also die Verfolgung strategischer, längerfristiger Ziele muß dem Zuständigkeitsbereich von Operateuren zugewiesen werden. Andererseits muß die Anlage weitgehend automatisch gefahren werden, da ein Mensch nicht präzise und schnell genug in komplexe automatische Prozesse ein greifen kann. Außerdem ist die Datenflut bezüglich der Werte von Anlagenparametern bei weitem zu groß, als daß sie ohne automatische Aufbereitung den Operateuren zugeleitet werden kann, die effizient Einblick in den aktuellen Anlagenzustand gewinnen und daraus ggf. Aktivitäten zur geeigneten Beeinflussung des Anlagenzustands ab- und einleiten müssen. Zudem können oder sollen Aktivitäten fast immer nicht direkt, sondern nur vermittels Automaten durchgeführt werden.

Die der vorliegenden Erfindung zugrundeliegende Hauptaufgabe besteht darin, zur Lösung der vorstehend aufgezeigten Problematik ein Verfahren und ein zugehöriges leittechnisches System anzugeben, welche sich beide durch eine enge Integration und Koordination automatischer und menschlicher Maßnahmen auszeichnen. Zu lösende Unteraufgaben bestehen darin, daß möglichst viele Automaten nach der Erfindung - sowohl Sensoren als auch Stellglieder (z.B. Ventile, Manipulatoren oder andere Aktoren) - die Ergebnisse ihrer Aktivitäten mitteilen, die benötigten Steuerungsprogramme u.ä. vom leittechnischen System beziehen und ihre Aktivitäten über dieses System koordinieren sollen. Analog dazu sollen die Operateure die Ergebnisse ihrer Aktivitäten (soweit nicht von Sensoren erfaßbar wie z.B. Hypothesen) dem System mitteilen, die benötigten Informationen - Handbuchinformationen - von dort beziehen und ihre Aktivitäten mit denen anderer Operateure und/oder Automaten koordinieren können. Insbesondere sollen die leittechnische Unterstützung für Operateure, wie z.B. Handbücher mit den relevanten Informationen über den Verlauf der auszuführenden Tätigkeit, nicht auf Papier, sondern auf Computern verfügbar gemacht werden, um sie mit den dort ebenfalls auflaufenden Daten über den aktuellen Anlagenzustand in Beziehung setzen und so die Unterstützung auf die Situation beziehen zu können.

Bisherige Ansätze zur Lösung der aufgezeigten Problematik lassen sich zwei verschiedenen Grundmodellen zuordnen. Das erste Modell, vertreten durch die Dokumente D1 = EP-A2-0 280 553 und D2 = EP-A3-0 393 837, verwendet auf umfangreichen Simulationen.und Berechnungen etc. basierende, vorformulierte Prozeduren zur Unterstützung der Operateure. Unter Prozeduren wird bei (D1) und (D2) eine zeitlich feststehende Abfolge einzelner Aktivitäten in der Form verstanden, daß für jede Aktivität ein Anlagenzustand spezifiziert ist, der bei erfolgreicher Durchführung der Aktivität erreicht werden sollte. In der Prozedur ist jeweils sowohl eine Folgeaktivität angegeben, mit der die Prozedur im Erfolgsfalle fortzusetzen ist, als auch eine alternative Folge Aktivität für den Fall, daß der spezifizierte Anlagenzustand nicht erreicht wurde. Die Abarbeitung der Prozeduren wird von den vorgeschlagenen Systemen dadurch unterstützt, daß die angegebenen Anlagenzustände mit den tatsächlichen verglichen werden und dementsprechend Folgeaktivitäten automatisch angeboten werden können. Mit dieser Methode ist es relativ gut möglich, den Operateuren die strategischen Aspekte einer Tätigkeit in fertige Prozeduren gegossen zu präsentieren. Das zweite Modell, vertreten durch das Dokument D3 = EP-B1-0 077 080, stellt durch regelartige Assoziationen Verbindungen zwischen Anlagenzuständen und jeweils als Reaktion darauf geeignete Aktivitäten her. Im konkreten Fall wird bei (D3) über verschiedene Arten von Assoziationen wie z.B. zwischen Ursachen und resultierenden Anlagenzuständen, gegenwärtigen und zukünftigen Anlagenzuständen, Anlagenzuständen und Aktivitäten etc. in einem komplizierten mehrstufigen Ableitungsvorgang automatisch aus einem gegebenen Anlagenzustand auf eine "optimale" Aktivität geschlossen, die den Operateuren zur Durchführung präsentiert wird. Mit dieser Methode kann vor allem eine taktische, anlagenzustandsbezogene Handlungsweise einer Tätigkeit relativ gut dargestellt werden.

Gerade das, wodurch das erste Modell nach (D1) und (D2) für Autoren der Prozeduren wie für Operateure so einfach und intuitiv verwendbar wird, nämlich daß ein linearer Ablauf (mit kleinen Seitenästen für Fehlerfälle) entworfen und im praktischen Einsatz einfach Schritt für Schritt abgearbeitet werden kann, bildet die Ursache für das größte Problem bei komplizierten Tätigkeiten: Die vorformulierten Prozeduren bauen auf einer vorherbestimmten Abfolge von Anlagenzuständen auf. Weicht die tatsächliche Abfolge - aus welchen Gründen auch immer - davon ab, kann das System keine Hilfestellung mehr bieten. Die Angabe alternativer Aktivitäten für den Fehlerfall verschiebt das Problem nur um eine Stufe, beseitigt es jedoch nicht. Es fehlt bei diesem Ansatz die taktische Komponente, die vor allem bei unerwarteten Anlagenzuständen bzw. unerwarteten Folgen von Anlagenzuständen Unregelmäßigkeiten bei der Abarbeitung der Prozeduren, wie z.B. Sprüngen mitten in eine (oder einer) Prozedur, den Operateuren das Wiederaufsetzen und Fortsetzung der Abarbeitung einer Prozedur an einer geeigneten Stelle ermöglichen würde.

Auf die taktische Komponente verlaßt sich wiederum das zweite Modell nach (D3) vollständig. Dadurch kann es zwar auch bei unerwarteten Entwicklungen des Anlagenzustands gut Hilfestellung leisten, hat jedoch bei der Darstellung strategischer Vorgehensweisen enorme Schwierigkeiten. Es stellt für die Autoren von leittechnischen Systemen, denen das letztgenannte Grundmodell zugrundeliegt, ein kaum lösbares Problem dar, mit einer Sammlung lokaler, heuristischer Assoziationen einen zielgerichteten, strategischen Globalverlauf der Tätigkeit zu beschreiben. Dies hat seine Ursache vor allem darin, daß Systeme nach dem zweiten Grundmodell ausschließlich den gegenwärtigen Anlagenzustand (also nicht die Historie des Anlagenverhaltens) und insbesondere nicht den Verlauf der bisherigen Tätigkeit zur Ableitung von Vorschlägen für aktuell einzuleitende Aktivitäten nutzen. Einen integrierten und flexiblen Bezug der Beschreibung der Tätigkeit auf die gesamte "Situation", bestehend aus aktuellem Anlagenzustand (i.e. Anlagenhistorie) und Stand der Durchführung der Tätigkeit (i.e. Aktionshistorie) bietet keines der beiden existierenden Grundmodelle.

Es existieren noch weitere, beiden Grundmodellen gemeinsame Schwachstellen: Weder werden die Aktivitäten der Automaten über das System geleitet und koordiniert, so daß mögliche und geeignete Überwachungs- und Steuerungsmöglichkeiten gar nicht ausgenutzt werden, noch erhalten die Automaten ihre Steuerungsprogramme u.ä. von diesem System, so daß man auf die Möglichkeit direkten Eingriffs in die tatsächliche Durchführung einzelner Aktivitäten durch Automaten verzichtet.

Der Bezug zum Anlagenzustand wird nur an Punkten zwischen einzelnen Aktivitäten hergestellt. Eine Aktivität wird immer als ein geschlossener Block angesehen, der un-bedingt ablaufen kann, wenn er einmal erreicht ist. Dieser Ansatz ist für die Beschreibung komplizierter Tätigkeiten zu grobkörnig. Häufig muß gerade während der Durchführung einer Aktivität der Übergang in verschiedene Phasen der Durchführung unter Bezugnahme auf die Situation gesteuert werden.

Damit z.T. in direktem Zusammenhang steht ein weiteres Problem, das sich aus der mangelnden Möglichkeit ergibt, die beschriebene Tätigkeit auf verschiedenen Detaillierungsniveaus zu spezifizieren, d.h. die Durchführung einer Aktivität durch den Verlauf einer Anzahl detaillierterer Aktivitäten zu beschreiben. So ist es für die Operateure nicht möglich, Informationen über den auszuführenden Tätigkeitsverlauf je nach Interesse, Qualifikation, Zeitaufwand etc. auf ihre Bedürfnisse zugeschnitten verschieden detailliert präsentiert zu bekommen.

Ein weiterer Mangel der existierenden Modelle oder ihrer Ansätze liegt in der fixen Zuordnung von Zuständigkeiten für die Durchführung von Aktivitäten zwischen Automaten einerseits und Operateuren andererseits. Eine Übertragung findet immer außerhalb des Systems statt, indem auch nur Aktivitäten, die Automaten zur Durchführung übertragen sind, von Operateuren durch sogenannte Handmaßnahmen übersteuert werden können. Daß Operateure innerhalb des Systems Automaten von ihren Aufgaben entbinden oder gar diesen bestimmte Aktivitäten während der Tätigkeit zur Erledigung übertragen können, ermöglichen die bekannten Modelle nicht.

Die eingangs definierte Hauptaufgabe der Erfindung läßt sich nun dahingehend präzisieren, die vorstehend geschilderten Schwierigkeiten bei den Modellen 1 und 2 zu überwinden. Zur Lösung dieser Aufgabe ist das Verfahren nach der Präambel des Anspruchs 1 erfindungsgemäß durch die folgenden Merkmale gekennzeichnet, bei denen
a) Automaten, die als Rechenprogramm realisiert sind, und/oder Operateure mit Sensoren und Stellgliedern, die an den Prozeß angekoppelt sind und Prozeßinformation beschaffen bzw. den Prozeß beeinflussen, wechselwirken;
b) in einem Protokoll Informationen gesammelt werden, wie sich die Werte von Prozeßparametern entwickeln und welche Aktionen von den Automaten und den Operateuren ausgelöst werden, das heißt, daß sowohl die Historie des Verhaltens des Prozesses als auch die Historie der Aktionen im Protokoll festgehalten werden;
c) eine Menge von Spezifikationen bereitgestellt wird, die
   c1) angeben, welche Aktionen für welche Typen von Situationen geeignet sind ausgelöst zu werden, wobei die Typen auf die Historie des Prozesses und/oder auf die Historie der Aktionen Bezug nehmen, und
   c2) jeweils eine Menge von Verweisen auf Informationen zur Durchführung der Aktionen enthalten, welche an die Automaten bzw. Operateure gerichtet sind;
d) in einer Vergleichseinheit die genannten Typen von Situationen mit der durch das jeweilige Protokoll gegebenen aktuellen Situation verglichen werden, und festgestellt wird, ob die gegebene Situation einem Typ entspricht, und daraus Aktionsmöglichkeiten abgeleitet werden.

Vorteilhafte Weiterbildungen des Verfahrens nach der Erfindung sind in den Verfahrensansprüchen 2 bis 13 angegeben.

Gegenstand der Erfindung ist, wie bereits erwähnt, auch ein leittechnisches System mit Anzeigeeinrichtung, zum Steuern, Überwachen und Regeln von Prozessen in industriellen Anlagen, insbesondere von komplexen industriellen Prozessen, wie Betriebsführung in Störfallsituationen bei einem Kernkraftwerk, wie in der Präambel des Anspruchs 14 definiert, welchem die gleiche Aufgabe zugrundeliegt wie dem Verfahren nach der Erfindung. Zur Lösung dieser Aufgabe ist das leittechnische System nach der Erfindung durch die folgenden, im Anspruch 14 angegebenen Merkmale gekennzeichnet, wobei
a) die Automaten mit Sensoren und Stellgliedern, die an den Prozeß angekoppelt sind und Prozeßinformation beschaffen bzw. den Prozeß beeinflussen, wechselwirken;
b) ein erster Datenspeicher eines Protokoll-Moduls eingangsseitig zur Dateneingabe mit den Automaten und mit einer Ein-/Ausgabeeinheit für Operateure und ausgangsseitig über eine Datenleitung mit einer Vergleichseinheit verbunden ist, wobei das Protokoll-Modul zur Sammlung von Informationen eingerichtet ist, wie sich die Werte der Prozeßparameter entwickeln und welche Aktionen von den Automaten und Operateuren ausgelöst werden, d.h. zum Protokollieren der Historie des Verhaltens des Prozesses und der Historie der Aktionen;
c) ein zweiter Datenspeicher zum Einspeichern einer Menge von Spezifikationen für Ablaufbeschreibungen bzw. Typen von Situationen ausgangsseitig ebenfalls mit der Vergleichseinheit verbunden ist, wobei die Spezifikationen jeweils eine Ablaufbeschreibung enthalten und durch diese Ablaufbeschreibung definiert ist, welche Aktionen in welchen Typen von Situationen geeignet sind ausgelöst zu werden;
d) die Vergleichseinheit mit Mitteln zum Vergleichen der Typen von Situationen aus dem zweiten Datenspeicher mit der vom Protokoll-Modul protokollierten aktuellen Situation versehen ist, zum Vergleichen der Typen sowohl mit der Historie des Verhaltens des Prozesses als auch mit der Historie der Aktionen der Automaten und der Operateure und damit zum Feststellen, ob die aktuelle Situation einem der Typen entspricht sowie ob sich daraus Aktionsmöglichkeiten ergeben.

Vorteilhafte Weiterbildungen des leittechnischen Systems nach der Erfindung sind in den Ansprüchen 15 bis 19 angegeben.

Hier wie im folgenden wird unter "Agent" ein Operateur oder ein automatischer Agent bzw. "Automat" verstanden, wenn es auf die Unterscheidung zwischen menschlichem und automatischem Agenten nicht ankommt, d.h. insbesondere für die ausgelöste Aktion gleichgültig ist.

Die mit der Erfindung erzielbaren Vorteile sind vor allem in folgendem zu sehen:
1. Man kann in der Beschreibung des Verlaufs einer komplizierten Tätigkeit von Automaten und/oder Operateuren nun den Situationsbezug, bestehend aus einer beliebigen Mischung von prozeduralen (entsprechend Modell 1) und assoziativen (entsprechend Modell 2) Elementen integriert und flexibel herstellen.
2. Durch das Verfahren bzw. auch das leittechnische System nach der Erfindung kann der Ablauf der Aktivitäten der Automaten und Operateure protokolliert und koordiniert werden, und es werden für jeden Agenten (Automaten und/oder Operateur), der eine Aktivität durchführen soll, passende Durchführungsinformationen (Dokumente, Steuerungsprogramme und ähnliches) in einer für ihn verständlichen Sprache bereitgehalten.
3. Der Situationsbezug kann auch während der Durchführung einer Aktivität zur Steuerung der Auslösung einzelner Aktionen hergestellt bzw. aufrechterhalten werden.
4. Es wird ermöglicht, den Tätigkeitsverlauf durch wiederholte Detaillierung von Aktivitäten auf verschiedenen Detaillierungsebenen darzustellen und abzuarbeiten.
5. Es ist eine flexible Zuweisung von Aufgaben zwischen den Operateuren und den Automaten ermöglicht.

Im einzelnen ist zu den Vorteilen noch auf folgendes hinzuweisen: Da das Protokoll der Durchführung von Aktivitäten der Automaten und/oder Operateure, auf dessen Basis der Verlauf der Tätigkeit beschrieben wird, sowohl Beschreibungen bezüglich eines bisherigen Tätigkeitsverlaufs (Aktionshistorie) als auch eine bisherige Entwicklung von Anlagenparametern (Anlagenhistorie) enthält und die Ablaufbeschreibungen darauf insgesamt Bezug nehmen können, wird die Herstellung eines integrierten und flexiblen Situationsbezugs möglich. Die Ablaufbeschreibungen erlauben es, auch während der Durchführung einer Aktivität das Auslösen von zugehörigen Aktionen in bezug auf eine gegenwärtige Situation zu steuern.

Gemäß Anspruch 2 wird das Verfahren nach Anspruch 1 auf vorteilhafte Weise weitergebildet, was das Notieren einer Aktion als Ereignis im Protokoll, die Auslösung entsprechender Aktionen und den Zugriff zu der Hintergrundinformation in Ergänzung zur Durchführungsinformation betrifft. Gemäß Anspruch 12 kann in der Spezifikation einer Aktivität eine komplexere Aktivität und/oder eine Menge von Detailaktivitäten angegeben werden.

Die Informationen für die Operateure über die in einer vorgegebenen aktuellen Situation von der Vergleichseinheit festgestellten Aktionsmöglichkeiten werden gemäß einer bevorzugten Ausführungsform mit Hilfe von Aktionsdiagrammen dargestellt, die den Verlauf einer Tätigkeit grafisch beschreiben. Diesen Aktionsdiagramme, die sehr gut auf einem Bildschirm darstellbar sind, liegt die Erkenntnis zugrunde, Aktivitäten und Situationen miteinander in Beziehung zu setzen, um so den Tätigkeitsverlauf zu modellieren (Anspruch 3).

In der bevorzugten Anwendung des Verfahrens auf die Prozeßführung eines Kraftwerks, insbesondere eines Kernkraftwerks, wird gemäß einer Weiterbildung der Erfindung so vorgegangen, daß
a) die on-line verfügbaren relevanten Sensordaten über Automaten in das Protokoll eingespeist werden;
b) die gespeicherten Durchführungs- und ggf. Hintergrundinformationen den Inhalt eines vollwertigen Betriebs-Handbuchs der durch die Spezifikationen der Aktivitäten abgesteckten Tätigkeit der Automaten und Operateure abdecken.

In einer Weiterbildung des Gegenstandes des Anspruchs 4, der vorstehend zitiert wurde, ist erfindungsgemäß vorgesehen, daß
a) eine Menge von Spezifiktionen für Aktivitäten vorgesehen wird, die
   a1) sowohl Aktivitäten einer sogenannten "ereignis-orientierten" Vorgehensweise repräsentieren, bei der der Tätigkeitsablauf sich durch ein Flußdiagramm wiedergeben läßt und sich im wesentlichen auf die Aktionshistorie abstützt,
   a2) als auch Aktivitäten einer sogenannten "schutzziel-orientierten" Vorgehensweise repräsentieren, bei der der Tätigkeitsablauf sich durch eine Anlagenzustände und jeweils als Reaktion darauf geeignete Aktivitäten verknüpfende Tabelle wiedergeben läßt und sich im wesentlichen auf die Anlagenhistorie abstützt,
b) die den Spezifikationen der Aktivitäten zugeordneten Ablaufbeschreibungen den "ereignis-orientierten" bzw. "schutzziel-orientierten" Tätigkeitsablauf modellieren,
c) und die den Spezifikationen der Aktivitäten zugeordneten Durchführungsinformationen bzw. damit verknüpfte Hintergrundinformationen, insbesondere den Inhalt sogenannter "ereignis-orientierter" bzw. "schutzziel-orientierter" Kernkraftwerks-Betriebshandbücher enthalten und dem Operateur auch off-line zur Informationssuche zugänglich sind.

Es kann auf diese Weise zum einen mit den Prozeduren eines "ereignisorientierten Betriebshandbuches" ein Konzept der informellen Unterrichtung des Operateurs verwirklicht werden. Zielvorstellung dieses Konzeptes ist die Vollständigkeit der Information zur Durchführung von Aktivitäten bzw. Maßnahmen, wenn als Voraussetzung eine Störfallsituation eindeutig diagnostiziert werden kann. Wenn die aufgrund der Informationen des ereignisorientierten Betriebshandbuches getroffenen Aktivitäten zur Erreichung des gesteckten Sicherheitsziels nicht ausreichen und insbesondere wenn Verletzungen sogenannter "Schutzziele" auftreten, die einen sicheren Zustand des Kernkraftwerks selbst unter Störfallbedingungen definieren oder dadurch schutzziel-orientierte Aktivitäten notwendig werden, dann wird zum anderen auf das Schutzziel-Konzept des Betriebshandbuchs zurückgegriffen, und es werden Aktivitäten ausgelöst oder Maßnahmen getroffen, welche die Einhaltung der gesteckten Schutzziele garantieren. Erst wenn die Einhaltung der Schutzziele garantiert ist, kann wieder auf ereignisorientierte Störfall-"Behandlung" übergegangen werden. Beide Formen der Wissensvermittlung stellen für die komplexen Tätigkeiten ein Optimum dar. Ein rechnergestütztes Betriebshandbuch, insbesondere für Kernkraftwerke, wird hier wie im folgenden als Expert-Book bezeichnet. Wird es über den Bildschirm als reines Betriebshandbuch benutzt, so ergeben sich im Vergleich zu den herkömmlichen Betriebshandbüchern auf bedrucktem Papier deutlich verbesserte Zugangsmöglichkeiten (freie Textsuche, Browser etc.) zu Informationen. Außerdem kann ein solches Expert-Book sowohl durch die eingebundenen Aktionsdiagramme als auch durch formalen Objekten wie z.B. Spezifikationen von Aktivitäten zugeordnete Dokumente eine gezielte Informationssuche unterstützen. Das Expert-Book kann aber auch als Betriebshandbuch im On-line-Betrieb mit der Anlage dienen: Es übernimmt dann die volle Funktion eines Online-Handbuchs und Überwachungssystems für Stör- und Notfälle. Aufgrund des ständig aktualisierten Wissensstandes insbesondere zu aktuellen Anlagedaten des Expert-Book wird der Operateur auf die Informationen hingewiesen, die er für die Störfallbehandlung in der aktuellen Situation benötigt. Das bedeutet ein Gewinn an Handlungssicherheit und an Übersicht für das Wartenpersonal.

Das Verfahren nach der Erfindung eignet sich in besonderem Maße für flexible Aufgabenzuweisungen, wie sie im Anspruch 5 umschrieben sind, wonach zur Durchführung einer Tätigkeit durch mehrere Automaten und/oder Operateure jeder Automat über eine Datenleitung und jeder der beteiligten Operateure über eine Arbeitsstation (Tastatur, Maus, Bildschirm oder Spracheingabe- und -ausgabegeräte) mit den anderen Automaten und/oder Operateuren koordiniert wird, d.h. Angaben über von ihnen ausgelöste Aktionen in das gemeinsame Protokoll eingespeist oder gespeicherte Informationen abgerufen werden, so daß die Operateure und/oder Automaten gegenseitig über jeweils für sie relevante Aktionsmöglichkeiten in Kenntnis gesetzt werden.

Die Weiterbildungen des leittechnischen Systems nach der Erfindung gemäß Anspruch 14 betreffen Struktur und Funktion von Datenspeichern, durch die das System auf vorteilhafte Weise ergänzt wird. So enthält ein dritter mit den Automaten und der Eingabeeinheit für die Operateure kommunizierender Datenspeicher eine Menge von Informationen zur Durchführung von Aktivitäten, sogenannte Durchführungsinformationen, welche von den Operateuren und Automaten über Verweise anwählbar und auf Sichtgeräten der Anzeigeeinrichtung für die Operateure darstellbar bzw. über eine Datenleitung für die Automaten verfügbar sind (Anspruch 15).

Mit dem zweiten Datenspeicher für Situationstypen ist zweckmäßigerweise ein vierter Datenspeicher für situationsabhängig auszuführende Aktivitäten verbunden oder integriert. Weiterhin ist es zweckmäßig, wenn ein fünfter Datenspeicher für ergänzende Information vorgesehen ist, der mit dem dritten Datenspeicher für die Durchführungsinformation kommuniziert oder mit diesem integriert ist.

Weiterhin ist es vorteilhaft, daß ein sechster Datenspeicher für Aktionsmöglichkeiten über eine Ausgangsleitung der Vergleichseinheit mit dieser verbunden oder integriert ist und daß die für die Operateure und Automaten vorgesehenen Aktionsmöglichkeiten auf einem Bildschirm darstellbar bzw. über eine Datenleitung abrufbar sind. Zur Vermittlung einer Übersicht über den Gesamtprozeß (Situation, vorangegangene Ereignisse, durchgeführte und durchzuführende Aktivitäten) eignet sich - wie bereits erwähnt - in besonderem Maße ein Aktionsdiagramm nach der Erfindung.

Im folgenden werden die Erfindung sowie weitere an sie geknüpfte Merkmale und Vorteile anhand eines in der Zeichnung dargestellten Ausführungsbeispiels näher erläutert, d.h. es werden sowohl ein leittechnisches System als auch ein zugehöriges Verfahren zum Steuern, Überwachen und Regeln von Prozessen in industriellen Anlagen beschrieben. In der Zeichnung zeigt in zum Teil vereinfachter, schematischer Darstellung:
- Figur 1: in einem Blockdiagramm ein leittechnisches System nach der Erfindung für ein Kernkraftwerk, mit dem das Verfahren verwirklicht werden kann;
- Figur 2: ein Ausschnitt aus einem Flußdiagramm für eine ereignisorientierte Vorgehensweise zur Behandlung eines Störfalls aufgrund empfohlener Handmaßnahmen für die Operateure;
- Figur 3: ein Diagramm in Tabellenform für eine schutzziel-orientierte Vorgehensweise zur Behandlung eines Störfalls durch empfohlene Handmaßnahmen für die Operateure;
- Figur 4: ein Diagramm, das auf dem Bildschirm zur Charakterisierung eines Ereignisses beispielsweise erscheinen kann, welches die einzelnen Elemente des Ereignisses zeigt, wobei aus Mengen solcher Ereignisse ein Protokoll besteht und vorgegebene Bedingungen in Situationstypen von Ablaufbeschreibungen das Protokoll auf das Vorhandensein bestimmter Typen von Ereignissen überprüfen;
- Figur 5: ein weiteres Diagramm, welches die Elemente zeigt, aus denen ein Situationstyp beispielsweise aufgebaut sein kann, wobei dieser Situationstyp vorgegebene Bedingungen mit logischen Operatoren, im vorliegenden Fall ein Oder-Operator, verbindet;
- Figur 6: in einem Diagramm Durchführungsphasen, in denen sich Aktivitäten befinden können, und die möglichen Übergänge zwischen diesen Durchführunsgphasen (Phasenübergänge);
- Figur 7: in einem weiteren Diagramm den Aufbau der Spezifikation einer Aktivität mit einzelnen Aktivitäts-Elementen;
- Figur 8: ein Schema, wie ein Situationstyp in einzelne, logisch miteinander verknüpfte Bedingungen aufgegliedert wird und wie eine Bedingung mit einer durch das Protokoll vorgegebenen Situation bzw. mit deren einzelnen Ereignissen verglichen und ihre Übereinstimmung mit den durch die Bedingung formulierten Vorgaben überprüft wird, so daß sich die Aussage "wahr" (oder "unwahr") ergibt;
- Figur 9: eine Architektur des leittechnischen Systems nach Figur 1, bestehend aus informeller und formaler Schicht;
- Figur 10: eine die Architektur nach Figur 9 in kompakter Form enthaltende Beschreibung der zentralen Arbeitsweise des leittechnischen Systems nach Figur 1, wobei der Zyklus "Ereignis - Protokoll - Vergleich mit Situationstypen - Aktionsmöglichkeit" veranschaulicht ist, und

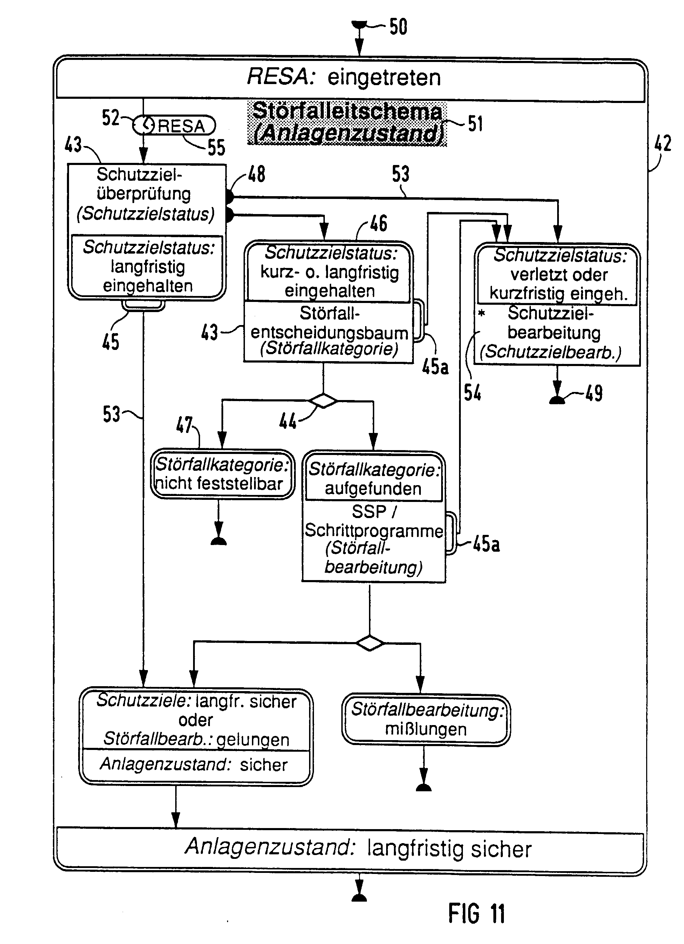

- Figur 11: ein Ausführungsbeispiel für ein Aktionsdiagramm, das auf dem Bildschirm eines Gerätes zur Information der Operateure erscheinen kann.

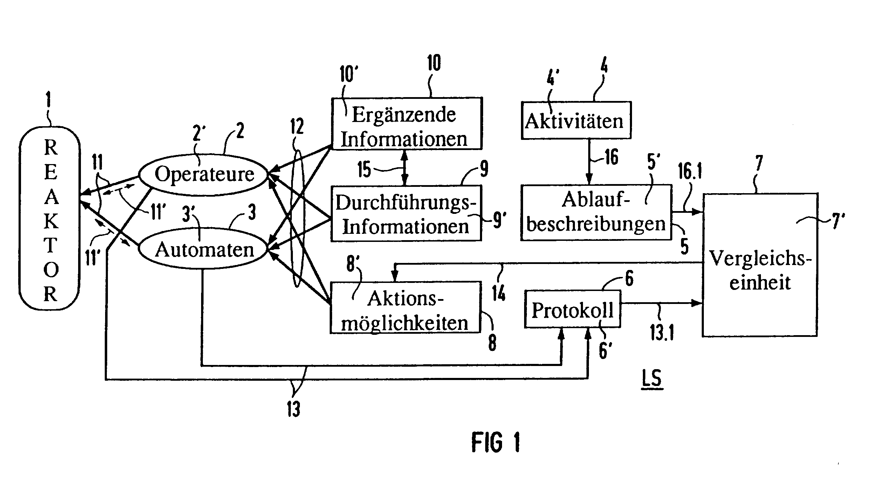

Im folgenden sei anhand von Figur 1 zunächst das leittechnische System nach der Erfindung erläutert, welches zum Steuern, Überwachen und Regeln von Prozessen in industriellen Anlagen, insbesondere von komplexen industriellen Prozessen dient. Im dargestellten Fall handelt es sich um die Steuerung und Überwachung sowie Regelung eines Kernkraftwerks, insbesondere nach oder bei einem Störfall, wobei das Kernkraftwerk durch einen Kernreaktor 1, vereinfacht Reaktor genannt, symbolisiert wird. Für das in Figur 1 schematisch dargestellte leittechnische System LS ist die Verwendung wenigstens eines digitalen Computers charakteristisch, durch dessen Rechenprogramm sogenannte automatische Agenten, auch Automaten 3 genannt, gebildet werden. Der mit den Automaten 3 verknüpfte Dateninhalt ist mit 3' bezeichnet. Auf den Reaktor 1 wirken mittelbar oder unmittelbar außer den Automaten auch die Operateure 2' ein, wobei 2' auch die Aktivitäten dieser Operateure (Schalthandlungen oder andere Befehle usw.) einschließt und mit 2 generell Ein/Ausgabeeinheiten, d.h. die Bedienungstastatur oder auch die visuelle Information (Datensichtgeräte) für die Operateure bezeichnet sind. Sichtgerate mit Bildschirmen für die Operateure sind deshalb nicht gesondert dargestellt; es versteht sich jedoch, daß diese am Leitstand vorhanden sind. Im folgenden werden die Handlungen 3' der Automaten 3 und der Operateure 2' als Aktivitäten bezeichnet, wobei das Fortschreiten der Durchführung von Aktivitäten vom Rechenprogramm des digitalen Computers durch Aktionen markiert wird, worauf später noch näher eingegangen wird. Die Automaten oder "automatischen Agenten" interagieren mit nicht näher dargestellten Sensoren zur Meßwerterfassung bzw. mit Stellgliedern, letztere können z.B. Ventile oder elektrische Schalter sein, Manipulatoren oder andere Aktoren (sie sind zur Vereinfachung ebenfalls nicht dargestellt). Die Sensoren bzw. Stellglieder, also die Automaten oder automatischen Agenten sind an den Prozeß, der durch das leittechnische System LS gesteuert, überwacht und geregelt werden soll, angekoppelt, sie beschaffen Prozeßinformation bzw. beeinflussen den Prozeß.

Im folgenden sei zunächst eine Übersicht über die in Figur 1 dargestellten Funktionsblöcke und die Datenleitungen gegeben. Es ist symbolisiert durch:
4 ein Datenspeicher für Aktivitäten, 4' sein Dateninhalt,
5 ein Datenspeicher für Ablaufbeschreibungen, 5' sein Dateninhalt,
6 ein Protokoll-Modul, 6' sein Dateninhalt bzw. das jeweils aufgezeichnete Protokoll der Ereignisse, d.h. der relevanten Ereignisse, die sich während des Prozesses des Reaktors 1 abspielen,
7 eine Vergleichseinheit, 7' ihr Dateninhalt,
8 ein Datenspeicher für von der Vergleichseinheit 7 vorgeschlagene Aktionsmöglichkeiten, 8' sein Dateninhalt,
9 ein Datenspeicher für Durchführungs-Informationen, 9' sein Dateninhalt,
10 ein Datenspeicher für ergänzende Informationen, der mit dem Datenspeicher 9 über eine bidirektionale Signalleitung in Dialogverbindung steht, 10' sein Dateninhalt,
11 Signalleitungen, welche die Einwirkung der Operateure 2' über ihre Eingabeeinheit 2 und der Automaten 3 auf den Reaktor 1 symbolisieren,
11' Gestrichelte Doppelpfeile für Aktivitäten von 3 bzw. 2'
12 verknüpfende Signalleitungen zwischen einerseits den Datenspeichern 8, 9 und 10 und andererseits den Automaten 3 bzw. der Ein- und Ausgabeeinheiten 2 für die Operateure 2', wobei durch die senkrecht stehende, schlanke Ellipse die Datenverknüpfung angedeutet ist,
13 Signal- bzw. Datenleitungen zwischen einerseits den Ein- und Ausgabeeinheiten 3 für die Operateure 2' und den Automaten 3, andererseits dem Protokoll-Modul 6,
13.1 eine Ausgangs-Datenleitung vom Protokoll-Modul 6 zur Vergleichseinheit 7,
14 eine Datenleitung von der Vergleichseinheit 7 zum Datenspeicher 8 für Aktionsmöglichkeiten,
15 Dialog- bzw. bidirektionale Datenleitung zwischen den Datenspeichern 9 und 10,
16 eine Datenleitung vom Datenspeicher 4 für Aktivitäten zum Datenspeicher 5 für Ablaufbeschreibungen,
16.1 Datenleitung vom Datenspeicher 5 zur Vergleichseinheit 7.

Es kann nun das Zusammenspiel der vorstehend erwähnten Funktionsblöcke bzw. -einheiten beschrieben werden: Der erste Datenspeicher eines Protokoll-Moduls 6 ist eingangsseitig zur Dateneingabe mit den Automaten 3 und mit der Ein- und Ausgabeeinheit 2 für die Operateure 2' verbunden, und er ist ausgangsseitig über eine Datenleitung 13.1 mit einer Vergleichseinheit 7 verbunden, wobei das Protokoll-Modul 6 zur Sammlung von Informationen eingerichtet ist, wie sich die Werte der Prozeßparameter entwickeln und welche Aktionen von den Automaten 3 und Operateuren 3' ausgelöst werden, d.h. es protokolliert die des Reaktors 1 und die Historie der Aktionen der Automaten und Operateure. In einem zweiten Datenspeicher 5 für Ablaufbeschreibungen, der ausgangsseitig ebenfalls mit der Vergleichseinheit 7 verbunden ist, sind eine Menge von Spezifikationen von Aktivitäten einspeicherbar, wobei die Spezifikationen 5' (also der Dateninhalt) jeweils eine Ablaufbeschreibung enthalten und durch diese Ablaufbeschreibung definierbar ist, welche Aktionen in welchen Typen von Situationen (Situationstypen) bei der Durchführung der jeweiligen Aktivität auslösbar sind.

Die Vergleichseinheit 7 ist mit Mitteln zum Vergleichen der Situationstypen aus dem Datenspeicher 5 mit der vom Protokoll-Modul 6 protokollierten aktuellen Situation versehen, so daß die Situationstypen sowohl mit der Anlagenhistorie als auch mit der Aktionshistorie der aktuellen Situation vergleichbar sind und damit feststellbar ist, ob die aktuelle Situation einem der Situationstypen entspricht, sowie daraus Aktionsmöglichkeiten ableitbar sind.

Der dritte, mit den Automaten 3 und der Ein/Ausgabeeinheit 2 für die Operateure 2' kommunizierende Datenspeicher 9 enthält eine Menge von Informationen zur Durchführung von Aktivitäten, sogenannte Durchführungsinformationen, welche von den Operateuren 2' und Automaten 3 über Verweise anwählbar und auf Sichtgeräten der (nicht dargestellten) Anzeigeeinrichtung für die Operateure darstellbar bzw. über eine Datenleitung für die Automaten 3 verfügbar sind. Mit dem zweiten Datenspeicher 5 für Ablaufbeschreibungen bzw. Situationstypen ist ein vierter Datenspeicher 4 für situationsabhängig auszuführende Aktivitäten 4' integriert oder über die Datenleitung 16 verbunden.

Ein fünfter Datenspeicher 10 für ergänzende Information ist mit dem dritten Datenspeicher 9 für die Durchführungsinformation über die bidirektionale Datenleitung 15' verbunden oder mit diesem Datenspeicher 9 integriert.

Schließlich ist ein sechster Datenspeicher 8 für Aktionsmöglichkeiten über eine Ausgangsdatenleitung 14 der Vergleichseinheit 7 mit dieser verbunden (oder mit dieser Vergleichseinheit 7 integriert), wobei zweckmäßigerweise die für die Operateure 2' und Automaten 3 vorgesehenen Aktionsmöglichkeiten auf einem Bildschirm darstellbar bzw. über eine Datenleitung abrufbar sind.

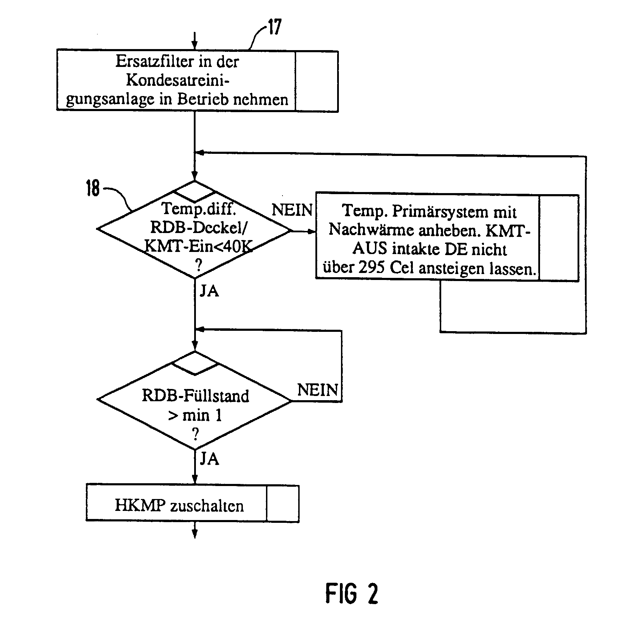

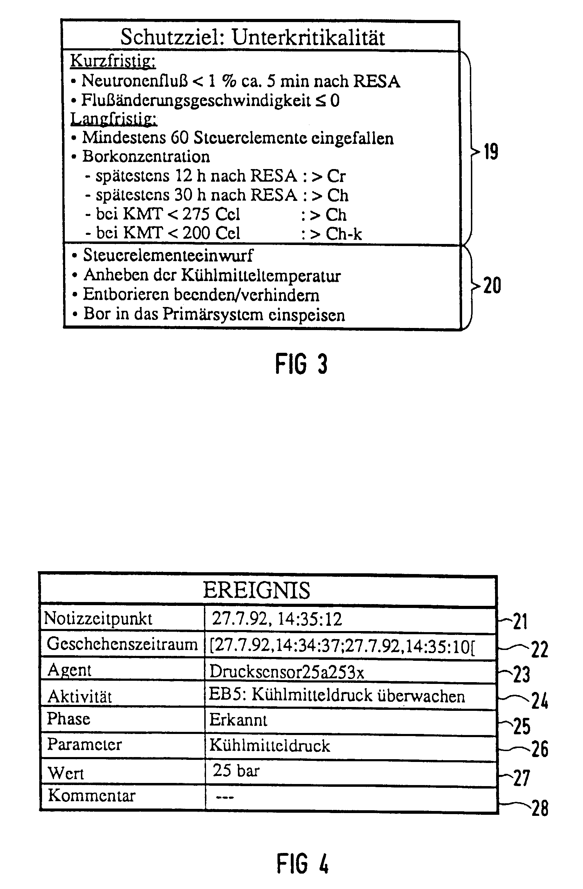

Für das weitere Verständnis der Erfindung sei zunächst auf je ein Beispiel der Wiedergabe einer ereignisorientierten Vorgehensweise (Figur 2) und einer schutzziel-orientierten Vorgehensweise (Figur 3) zur Beherrschung von Störfällen in Kernkraftwerken eingegangen, wie sie einem internen Stand der Technik entspricht und in dieser Art in sogenannten Betriebshandbüchern enthalten ist. Es werden also gemäß Figur 2 ereignisorientierte Aktivitäten der Operateure beschrieben, für welche vielfach vorformulierte Prozeduren verwendet werden, die aus Aktivitäten 17, z.B. "Ersatzfilter in der Kondensatreinigungsanlage in Betrieb nehmen" und Abfragen 18 ("Temperaturdifferenz RDB-Deckel/KMT-Ein < 40 K ?") bestehen. "RDB" bedeutet dabei Reaktordruckbehälter, "KMT" bedeutet Kühlmitteltemperatur, "Ein" bedeutet am Einlaß. In der darauffolgenden Raute ist eine weitere Anfrage "RDB-Füllstand > Min 1 ?" enthalten. Wenn diese Frage verneint wird, führt eine Schleife des Diagrammes zurück zum Hauptpfad, wenn die Frage bejaht wird, führt der Hauptpfad zu einer neuen Aktivität, nämlich "HKMP zuschalten". "HKMP" bedeutet Hauptkühlmittelpumpe. Eine weitere Aktivität ist über einen Querpfeil mit der Abfrage 18 verbunden und über eine Schleife mit dem Hauptpfad zurückverbunden, der Inhalt dieses Aktivitätskästchens spricht für sich selbst.

Für die schutzzielorientierte Vorgehensweise stellen Tabellen, die Typen von Situationen 19 und in diesen als Reaktionen geeignete Aktivitäten 20 assoziieren (siehe Figur 3), die bevorzugten Beschreibungsmittel dar. Cr, Ch, Ch-K stellen in Figur 3 Grenz-Borkonzentrationen dar; im übrigen spricht der Inhalt der Tabelle nach Figur 3 für sich selbst. Zwischen den Kategorien 19 und 20 besteht im Gegensatz zum Flußdiagramm nach Figur 2 weniger eine zeitlich-logische Aufeinanderfolge als eine Unterscheidung aufgrund der verwendeten Beschreibungsmittel. Nach Auftreten eines Störfalls laufen vom Anlagenzustand ausgelöste automatische Aktivitäten an, die dazu dienen, den Reaktor so lange in einem sicheren Zustand zu halten, bis die Operateure mit geeigneten Aktivitäten eingreifen und die Anlage in einen langfristig sicheren Zustand (d.h. unterkritisch, kalt) überführen. Nach einiger Zeit automatischer Aktivitäten, die von den Operateuren auf ihr korrektes Funktionieren hin überwacht werden, treten Schritt für Schritt auch die Operateure mit Aktivitäten in Erscheinung. Zu diesem Zweck stehen ihnen zwei Vorgehensweisen, wie bereits erwähnt, zur Verfügung. Die ereignisorientierte Vorgehensweise setzt eine sichere Diagnose der Klasse voraus, der der aufgetretene Störfall zuzuordnen ist. In diesem Fall können vorbereitete Prozeduren von den Operateuren abgearbeitet werden, entsprechend dem Flußdiagramm nach Figur 2, um die Anlage in einen langfristig sicheren Zustand zu überfünren. Während der gesamten Zeit, in der Aktivitäten zur Störfallbehandlung stattfinden, müssen die Operateure besonders wichtige Anlagenparameter in vorbestimmten Bereichen halten. Kriterien, die diese Bereiche beschreiben, sind zu Schutzzielen zusammengefaßt und werden von Sensoren, die nach der Terminologie der vorliegenden Erfindung zu den Automaten oder automatischen Agenten zu rechnen sind, überwacht. Verletzt der Zustand der Anlage eines oder mehrere Schutzziele, müssen Operateure umgehend auf schutzzielorientierte Vorgehensweise umschalten, d.h. anlagenzustandsbezogene Aktivitäten ergreifen, bis die Schutzziele wieder erreicht sind. Die Aktivitäten der Operateure beschränken sich dabei auf die Auslösung bestimmter Aktivitäten, während viele Überwachungs- und Steuerungsaktivitäten parallel von den automatischen Agenten bzw. Automaten durchgeführt werden.

Gemäß der Erfindung ist es möglich, die anhand von Figuren 2 und 3 beschriebene ereignis- und schutzziel-orientierte Vorgehensweise, wie sie dem internen Stand der Technik eines Betriebshandbuches entspricht, zu integrieren, indem die on-line verfügbaren, relevanten Sensordaten über Automaten in das Protokoll 6' (Figur 1) eingespeist werden und die gespeicherten Durchführungs- und ggf. Hintergrundinformationen 9', 10' den Inhalt eines vollwertigen Betriebs-Handbuchs der durch die Spezifikationen der Aktivitäten abgesteckten Tätigkeit der Automaten 3 und Operateure 2' abdecken, d.h. mit dem gesamten leittechnischen System vernetzt sind, so daß mit dem Verfahren nach der Erfindung auch komplexe Anlagen direkt gesteuert, überwacht und geregelt werden können.

Zum Verständnis des Verfahrens nach der Erfindung sei zunächst auf Figur 4 verwiesen. Gemäß diesem Verfahren wird eine Möglichkeit zur Beschreibung des Verlaufs der Tätigkeit (Aktivitäten der Automaten 3 und Operateure 2') gebildet. Dafür ist eine Beschreibungssprache für komplexe Tätigkeiten geschaffen worden. Jegliches Wissen über die aktuelle Situation bezieht das System aus dem Protokoll 6, das eine nach Notizzeitpunkten geordnete Liste von Ereignissen Figur 4 darstellt. Jedes Ereignis besitzt folgende Einträge: Zeitpunkt 21, zu dem das Ereignis im Protokoll notiert wurde; Zeitraum 22, in dem das Ereignis stattgefunden hat; Agent 23, der die Aktion ausgelöst hat und das Ereignis notieren ließ; Aktivität 24, zu der die Aktion gehört; Phase 25, in die die Durchführung der Aktivität getreten ist und den Typ der Aktion wiedergibt; Anlagenparameter 26, zu dem die Aktivität eine Erkenntnis gewonnen hat; Zustand des Parameters 27, der durch die Aktion gefunden wurde; Kommentar 28, den der Agent ggf. zur Auslösung der Aktion abgegeben hat.

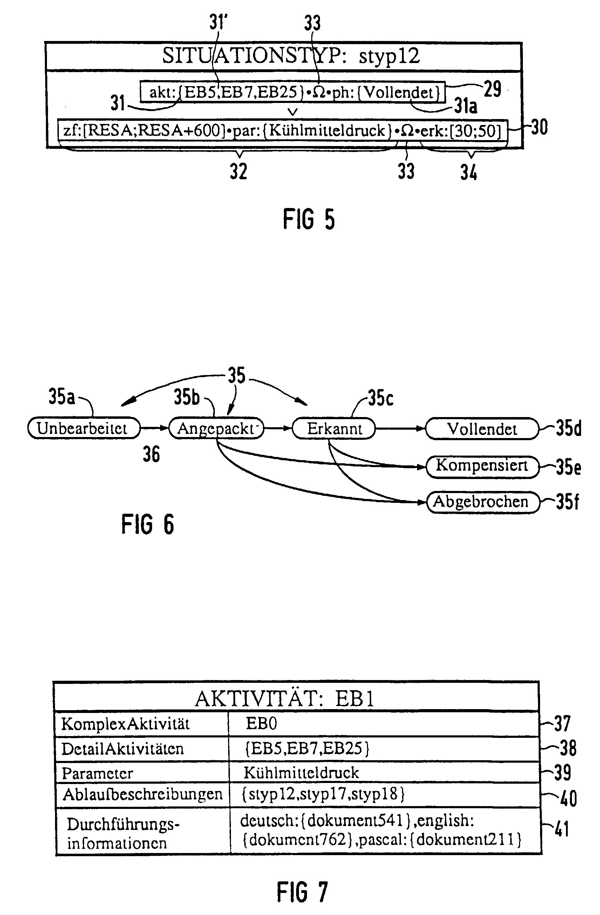

Figur 5 zeigt zwei aussagelogisch miteinander verknüpfte Bedingungen 29, 30, das Verknüpfungszeichen bedeutet "oder"; beide Bedingungen beschreiben einen Ereignistyp, z.B. "styp 12". Auch jede der beiden Bedingungen 29, 30 beschreibt den Typ eines Ereignisses. Findet sich in der aktuellen Situation ein Ereignis, das diesem Typ entspricht, bewertet die Bedingung die entsprechende Situation positiv. Eine Bedingung 29 bzw. 30 besteht aus zwei Mengen von Prädikaten 31, 31a bzw. 32, 34 über Ereignisse. Ein Prädikat 31 kann z.B. bewerten, ob ein Ereignis eine Aktion zu einer Aktivität aus einer Menge 31' vorgegebener Aktivitäten notiert, ob bei dieser Aktion zu einem aus einer Menge vorgegebener Parameter eine Erkenntnis 31a gewonnen wurde, oder ob der Zeitraum, in dem die Aktion stattgefunden hat, in einem bestimmten Zeitintervall gelegen hat. Ein solches Zeitintervall, auch Zeitfenster zf genannt, wird in eckige Klammern gesetzt und bedeutet beim Prädikat 32 z.B., daß "RESA" eingetreten sein muß - Intervallanfang - und daß nach "RESA" 600 sec. verstrichen sein müssen. Beim Prädikat 34 bedeutet [30,50] ein Bereich für den Kühlmitteldruck. Mit 33 ist ein Symbol Ω für einen Isolationsschritt bezeichnet, der anhand von Figur 5 noch erläutert wird, RESA bedeutet Reaktorschnellabschaltung.

Ein Situationstyp nach Figur 5 verbindet eine Menge von Bedingungen mittels aussagelogischer Verknüpfungen zu einer Formel, die den Typ einer Situation beschreibt. Da selbst innerhalb von Bedingungen auf Aktivitäten und gleichzeitig auf Anlagenparameter Bezug genommen werden kann, ist der integrierte und flexible Situationsbezug sichergestellt.

Ein Element des Aufbaus von Aktivitäten - vgl. Figur 6 und Figur 7 - sind Ablaufbeschreibungen 40. Sie bestehen jeweils aus einer Liste von Situationstypen. Jedes Listenelement beschreibt den Typ einer Situation, in der ein Phasenübergang 36 (Figur 6) in eine neue Durchführungsphase 35 der Aktivität stattfinden kann. Dem Übergang 36 in eine neue Phase entspricht das Auslösen einer Aktion zur Aktivität: Auf diese Weise kann das situationsbedingte Beginnen, Beenden, Abbrechen etc. einer Aktivität beschrieben werden. Eine Aktivität kennt die Durchführungsphasen "Unbearbeitet" 35a, "Angepackt" 35b, "Erkannt" 35c, "Vollendet" 35d, "Abgebrochen" 35e, und "Kompensiert" 35f und kann Phasenübergänge 36 entlang der in Figur 6 eingezeichneten Pfeile ausführen. Während Aktionen zu allen Phasen Informationen über die Durchführung der Tätigkeit durch entsprechende Ereignisse in das Protokoll 6' (Figur 1) einbringen, ergänzt ein "Erkannt"-Ereignis das Protokoll zusätzlich um eine Beschreibung des aktuellen Zustands eines Anlagenparameters 39, wie sie durch die Aktivität gewonnen wurden. Zu Aktivitäten gehört weiterhin eine Menge von Beschreibungen ihrer Durchführung 41 in unterschiedlichen Sprachen von Agenten. Solche Sprachen können für Operateure z.B. Deutsch, Englisch etc. und für Automaten formale Sprachen sein, die diese ausführen können, in der Regel also Programmiersprachen. Gibt ein Agent die Sprache an, die er versteht, bekommt er automatisch die ihm jeweils verständlichen Informationen angeboten. Außerdem steht jede Aktivität in der Detaillierungshierarchie der Gesamttätigkeit. Jede Aktivität besitzt eine komplexere Aktivität 37 und eine Menge detaillierterer Aktivitäten 38. An der Spitze der Hierarchie steht die Gesamttätigkeit, an den unteren Enden der Hierarchie hängen nicht weiter detaillierte, primitive Aktivitäten.

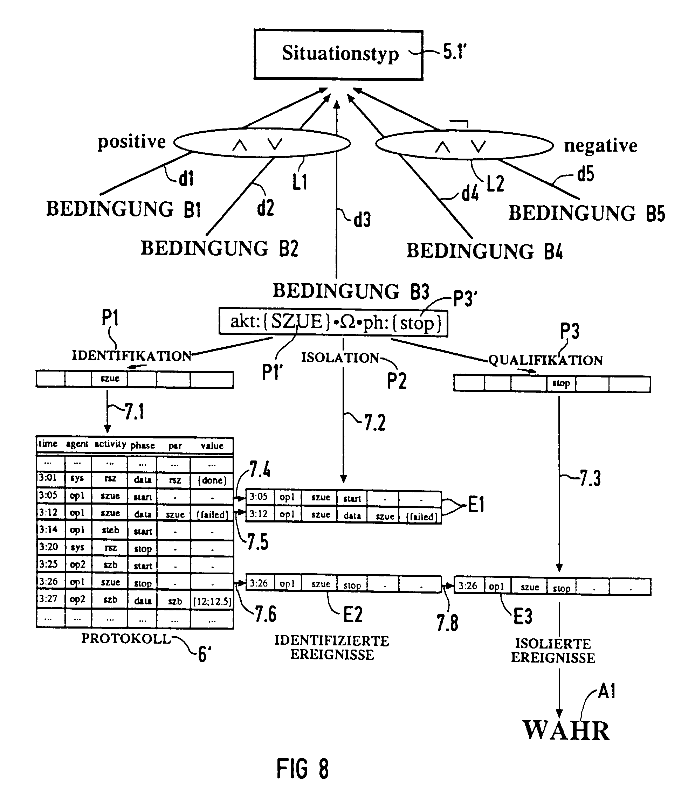

Anhand von Figur 8 in Verbindung mit Figur 5 wird nun erläutert, wie die Vergleichseinheit 7 nach Figur 1 prinzipiell arbeitet. Das Schema nach Figur 8 stellt einen Vergleichsalgorithmus dar. Die aussage-logische Verknüpfung einer Reihe von Bedingungen B1 bis B5, und zwar z.B. positive Bedingungen B1 bis B3 und negative Bedingungen B4, B5 ergibt einen bestimmten Situationstyp 5.1', der als Dateninhalt in dem Datenspeicher 5 (Figur 1) enthalten ist. L1 sind logische (Und/Oder -)Verknüpfungen zwischen den Bedingungen B1 bis B3, L2 bedeuten logische (Und/Oder-)Verknüpfungen zwischen den Bedingungen B4, B5. dl bis d5 bedeuten Hinweispfeile für die logischen Verknüpfungen B1 bis B5. P1 symbolisiert einen Identifikationsschritt für die näher betrachtete Bedingung B3, P2 einen Isolationsschritt und P3 einen Qualifikationsschritt. In der Bedingung B3 ist die Aktivität "SZUE" = Schutzzielüberwachung als ein Mengenprädikat enthalten und die Phase "STOP" als anderes Pradikat einer Menge. Die beiden Prädikate, das eine eine Aktivität betreffend und das andere eine Durchführungsphase, sind mit P1' und P3' bezeichnet. P1' stellt also den Identifikationsteil einer Bedingung dar, vergleichbar mit dem Identifikationsteil 32 aus Figur 5. Durch die Vergleichseinheit 7 werden nun mit dem im Identifikationsteil der Bedingung B3 aufgeführten Prädikat B1', welches einen Typ von Ereignis definiert, die dem Ereignistyp entsprechende Ereignisse aus dem Protokoll 6' herausgefiltert, wie es der Pfeil 7.1 symbolisiert. Von diesen identifizierten Ereignissen El (siehe die Hinweispfeile 7.4 und 7.5 für die Schrittdurchführung) wird das zeitlich letzte Ereignis isoliert, wie es durch das Ω-Zeichen in der Bedingung B3 und den Pfeil 7.2 veranschaulicht wird. Dies ergibt das identifizierte und isolierte Ereignis E2, welches aus dem Protokoll 6' herausgesucht wurde, vgl. Pfeil 7.6. Dieses identifizierte und isolierte Ereignis E2 wird mit dem im Qualifikationsteil P3' der Bedingung B3 aufgeführten Prädikaten in einem Qualifikationsschritt P3 daraufhin überprüft, ob es dem dadurch definierten Ereignistyp entspricht. Bei Entsprechung wird die Bedingung mit "zutreffend" oder "wahr" markiert, siehe die Aussage Al über die Entsprechung von Bedingung und Protokoll (ermittelter Situationstyp).

Zusammenfassend ergibt sich also, daß die Vergleichseinheit mit den Prädikaten, die im Identifikationsteil 32 (Figur 5) oder P1' (Figur 8) einer Bedingung 30 bzw. B3 aufgeführt sind, alle Ereignisse El aus dem Protokoll 6' herausfiltert, die durch die Prädikate positiv bewertet werden. Anschließend isoliert sie (7.2) aus den herausgefilterten Ereignissen El das zuletzt stattgefundene Ereignis E2 und übergibt dieses den Prädikaten P3' des Qualifikationsteils bzw. -schritts P3 zur Bewertung. Besteht das isolierte Ereignis auch diese Qualifikationsprüfung, ist die durch das Protokoll 6' gegebene Situation durch die untersuchte Bedingung positiv bewertet (A1). Ergibt die Formel eines Situationstyps 5.1' nach Auswertung der einzelnen Bedingungen B1 bis B5 und Einsetzen der Ergebnisse insgesamt eine positive Bewertung, entspricht die aktuelle Situation der Beschreibung des Situationstyps. Da Situationstypen in Ablaufbeschreibungen 40 von Aktivitäten (Figur 7) Situationen beschreiben, in denen Aktionen ausgelöst werden, kann bei positiver Bewertung einer solchen Situationstyps die entsprechende Aktion als potentiell auslösbar markiert werden.

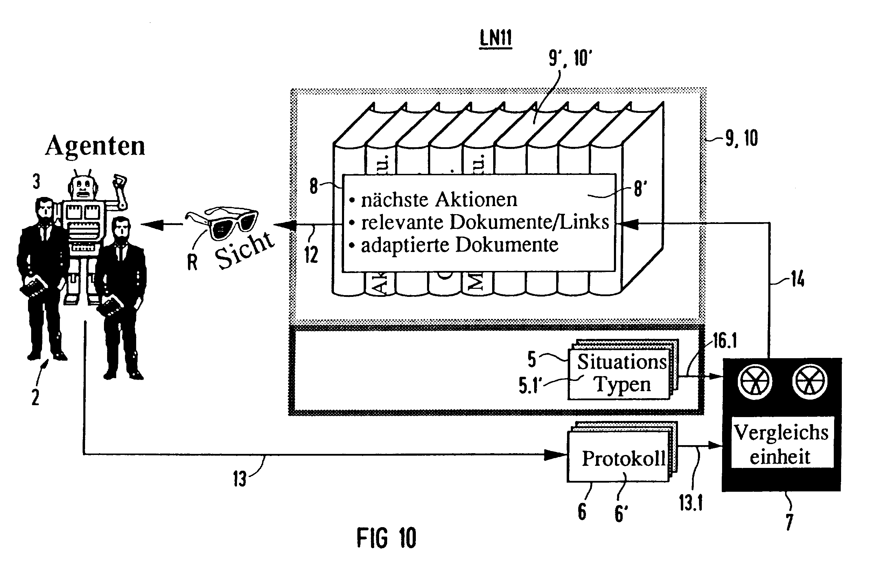

Figur 10 zeigt den Zyklus z.B. beginnend beim Auslösen einer Aktion durch Operateure 2' bzw. Automaten 3 ("Agenten"), das Eintragen dieser Aktion als Ereignis in das Protokoll 6', das Vergleichen von Situationstypen 5.1' mit der neu entstandenen Situation 6' in der Vergleichseinheit 7 und die Ausgabe von Aktionsmöglichkeiten 8' an die Agenten 2', 3. Gleiche Teile zu Figur 1 sind in dieser Figur 10 auch mit den gleichen Bezugszeichen versehen, es handelt sich um ein leittechnisches Netzwerk LN 11 als Teil des Systems LS (Figur 1). Die Koordination der Agenten 2', 3 findet aktivitätsbezogen statt. Die Agenten einigen sich darüber, wer welche Aktivitäten ausführen soll, indem sie sich gegenseitig Aufträge geben und diese akzeptieren oder ablehnen. Ein Auftrag enthält eine Menge von Aktivitäten und verpflichtet, wenn er akzeptiert wurde, den beauftragten Agenten zu deren Durchführung. Automatische Agenten 3 sind vorzugsweise so programmiert, daß sie in den seltensten Fällen einen Auftrag ablehnen können (sie konnten nur Aufträge ablehnen, die widersinnig waren oder eine Gefahr heraufbeschwören würden). Der beauftragte Agent 2', 3 soll Aktionen zu den übertragenen Aktivitäten auslösen, bis keine Aktionsmöglichkeiten mehr bestehen und die Aktivität in eine neutrale Durchführungsphase ("Unbearbeitet", "Vollendet", "Kompensiert", "Abgebrochen") übergegangen ist. Durch das Auftraggeber - Auftragnehmer-Verhältnis zwischen den Agenten 2', 3 wird gleichzeitig eine Kommunikationsverbindung aufgebaut. Aktionen, die der Auftragnehmer zu den Aktivitäten des Auftrags auslöst, werden automatisch an den Auftraggeber gemeldet.

Figur 10 zeigt außerdem, daß der Inhalt 9', 10' der beiden Datenspeicher 9 und 10 (vgl. auch Figur 1), also das sogenannte Expert-Book, und der Inhalt 8' des Datenspeichers 8 für Aktionsmöglichkeiten zu einer Aussage über die nächsten Aktionen, über relevante Dokumente und Querverbindungen (Links) und über adaptierte Dokumente kombiniert werden. All diese Aussagen können für die Operateure 2' und Automaten durch eine sogenannte Sicht auf das für sie Wesentliche beschränkt werden, was durch die dunkle Brille R symbolisiert ist. Eine "Sicht" basiert z.B. auf der Angabe einer Menge von Aktivitäten, die entweder explizit oder implizit, letzteres z.B. über die relevanten Teile der Anlage, an denen die gesuchten Aktivitäten stattfinden sollen, formuliert werden können.

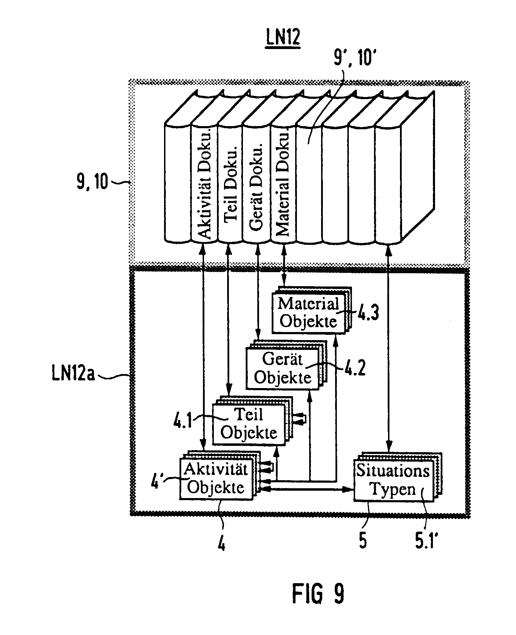

In Figur 9 ist ein leittechnisches Teilnetzwerk LN12 dargestellt, bestehend aus den hier kombiniert dargestellten Datenspeichern 9 und 10, deren Inhalt die sogenannte informelle Schicht 9', 10' des Betriebshandbuchs umfaßt, die aber hier weiter aufgefächert ist, und zwar in Abstimmung auf die feinere Auffächerung des Netzwerkteils LN12a, welcher außer dem Datenspeicher 5 für Ablaufbeschreibungen bzw. Situationstypen auch den Datenspeicher 4 für Aktivitäten und weitere zusätzliche Datenspeicher 4.1 bis 4.3, welche zusätzlich zum Inhalt "Aktivitäten" bzw. "Aktivität Objekte" des vierten Datenspeichers 4 noch die Spezifikationen für "Teil-Objekte", "Gerät-Objekte" und "Material-Objekte" enthalten. Dabei bedeuten: "Teil-Objekte" formale Spezifikationen von Teilen der Anlage, an denen Aktivitäten stattfinden, "Gerät-Objekte" formale Spezifikationen für die Durchführung von Aktivitäten notwendigen Geräten und "Material-Objekte" formale Spezifikationen von während der Durchführung von Aktivitäten zu verbrauchenden Materialien. All diese Spezifikationen, die mit 4' sowie 4.1' bis 4.3' bezeichnet sind, sind über entsprechende, nicht näher bezeichnete Datenleitungen mit dem Datenspeicher 4 bzw. dessen Inhalt 4' gekoppelt, ferner mit der entsprechend aufgegliederten informellen Schicht 9', 10' der Datenspeicher 9, 10 und mit dem Datenspeicher 5 für Situationstypen bzw. Ablaufbeschreibungen.

Nachdem nun Aufbau und Struktur von Ablaufbeschreibungen, Protokoll, Vergleichseinheit und Informationen beschrieben ist, kann die Funktionsweise des leittechnischen Systems LS bzw. das Verfahren nach der Erfindung bzw. zur Beherrschung, d.h. Steuerung, Überwachung und Regelung eines Reaktorstörfalls aufgezeigt werden. Die Koordination zwischen Operateuren 2' und Automaten 3 erfolgt meist so, daß erstere Auftraggeber, letztere Auftragnehmer sind. Dazu existiert das System nach Figur 1, das alle Durchführungs- 9' und sonstige Erganzungsinformationen 10' (vgl. auch Figur 9) zur Störfallbehandlung für Automaten wie Operateure sowie eine umfassende Beschreibung 4', 5' des Verlaufs der Tätigkeit zur Behandlung von Störfällen in Form von Ablaufbeschreibungen 5' zu Aktivitäten (vgl. auch Figur 9) bereithält. Die Tätigkeitsbeschreibung enthält mehrere Detaillierungsniveaus. Agenten (typischerweise Automaten) 2', 3 führen als Teil der Tätigkeit ständig Aktivitäten 11' (gestrichelte Pfeile) durch, die Anlagenparameter daraufhin überwachen, ob ein Störfall eintritt, und tragen Informationen zu den aktuellen Parameterwerten mit "Erkannt"-Ereignissen in das Protokoll 6' ein. Die Vergleichseinheit 7 untersucht nach jedem Notieren eines Ereignisses im Protokoll, ob nun eine Situation eingetreten ist, die durch irgendwelche Situationstypen 5.1' (Figur 8) beschrieben ist, und sich dadurch eine Aktionsmöglichkeiten 8', 14 eröffnen würden (vgl. auch Figur 10). Sobald ein Störfall eintritt, ändern sich die aktuellen Parameterwerte auf charakteristische, durch Situationstypen von Ablaufbeschreibungen beschriebene Weise, und die Vergleichseinheit 7 kann den Agenten 2', 3 erste Aktionsmöglichkeiten 8' zur Störfallbehandlung über Signalleitung 14 nennen. Typischerweise werden zunächst Aktionen zu Aktivitäten ausgelöst, die den Automaten 3 zur schnellen Reaktion von Operateuren 2' zugewiesen wurden, und als Ereignisse in das Protokoll 6' eingetragen. Die Steueranweisungen zur Durchführung der Aktivitäten erhalten die Automaten 3 aus den entsprechenden Durchführungsinformationen 9'. Die Operateure 2' bekommen automatisch Meldungen über die Aktionen, die bei der Durchführung dieser Aktivitäten von den Automaten 3 ausgelöst werden, und können so den korrekten Verlauf der automatischen Maßnahmen (siehe Figur 10, "Sicht" R) überwachen. Nach einiger Zeit greifen die Operateure 2' aktiv in die Regelung des Reaktors 1 ein, um ihn in einen langfristig sicheren Zustand zu überführen. Sie übernehmen bestimmte Aktivitäten 4' in ihre Verantwortung bzw. beauftragen sich gegenseitig entsprechend und lösen auf der Basis angebotener Aktionsmöglichkeiten 8' Aktionen aus. Sie erhalten Informationen zu ihrer Durchführung automatisch und können sich zusätzlich mit anderen Informationen 10', die im Datenspeicher 10 gespeichert und mit den Durchführungsinformationen 9' verknüpft 15 sind, versorgen. Dabei sind sie grundsätzlich nicht gezwungen, ausschließlich Aktionen auszulösen und anschließend als Ereignisse zu notieren, die das System den Agenten 2', 3 vorschlägt. Sollte es der Anlagenzustand erfordern, kann ein Agent 2', 3 jederzeit unabhängig von den Vorschlägen des Systems LS agieren. Die Aktionen, die er als Ereignisse dem Protokoll 6' hinzufügt, verändern die beschriebene Situation und ermöglichen es dem System, sobald diese einem der Aktivitäten zugeordneten Situationstypen entspricht, erneut situationsbezogene Aktionsmöglichkeiten 8' vorzuschlagen. Außerdem können Operateure 2' je nach Qualifikation, Interesse etc. die Tätigkeit unterschiedlich detailliert durchführen, d.h. Aktionen zu Aktivitäten auf verschiedenen Detaillierungsniveaus auslösen. Zudem können sie jederzeit geeignete Automaten 3 mit Routine Aktivitäten wie z.B. Überwachung oder Regelung von Parametern beauftragen. Kompliziertere Aktivitäten könnten z.B. auch Expertensystemen zugewiesen werden. Zu beachten ist, daß der Verlauf der gesamten Tätigkeit zur Störfallbehandlung inklusive automatischer, ereignisorientierter und schutzzielorientierter Aktivitäten im leittechnischen System beschrieben ist (vgl. Figuren 2 und 3). Die Aktivitäten können flexibel den Agenten 2', 3 zur Durchführung zugeteilt werden, wobei die Operateure 2' durch Automaten 3 von Teilen der Tätigkeit entlastet werden können, vgl. Anspruch 13.

Um über die taktische Sicht der in einer Situation möglichen Aktionen hinaus Operateuren 2' der strategische Überblick über die Gesamtsituation vermittelt wird, ist ein geeignetes Darstellungsmittel gefunden worden, das den Verlauf der Tätigkeit übersichtlich wiedergeben kann. Dies geschieht durch eine grafische Präsentation mittels Aktionsdiagrammen nach Figur 8.

Den Kern der Definition von Aktionsdiagrammen bildet die Formulierung von Aktivitäten und Situationstypen. Aktivitäten werden grafisch als Rechtecke 42, 43 präsentiert. Der einbeschriebene Text erläutert das Ziel der Durchführung der Aktivität und gibt bei Bedarf den Anlagenparameter in Kursivschrift an, über den die Aktivität Erkenntnisse gewinnt. Betritt man das Kästchen über die obere waagrechte Linie, ist das als Beginnen der Aktivität zu deuten. Analog dazu vollendet man die Aktivität, wenn man das Rechteck über die untere waagrechte Linie verläßt. Verlaßt man das Rechteck über eine der senkrechten Linien, setzt ein neuer Handlungsstrang während der Bearbeitung der Aktivität an. Ob dabei die verlassene Aktivität abgebrochen wird oder unbeeinflußt weiterläuft, muß durch weitere graphische Mittel (s.u.) beschrieben werden. Die hierarchische Detaillierung von Aktivitäten erfolgt einfach dadurch, daß innerhalb eines Aktivitätskästchens 42, welches ein großes Rechteck für eine Komplexaktivität bildet, ein beliebiges Aktionsdiagramm aufgebaut werden kann. In diesem Fall wird die Kurzbeschreibung 51 des Aktivitätsziels für (42) an den oberen Rand des Kästchens gerückt und grau hinterlegt. Eine zweite Möglichkeit besteht darin, mit einem Sternchen 54 auf die Existenz eines neuen bzw. eigenen Aktionsdiagramms zu verweisen. Als graphisches Symbol für Situationstypen wird ein Rechteck 47 mit doppeltem Rand und abgerundeten Ecken genutzt. Situationstypkästchen 47 beschreiben Situationen, die eingetreten sein sollten, will man sie zur Fortsetzung des Tätigkeitsverlaufs passieren. In das Situationstypkästchen wird zur Beschreibung der Situation Text eingesetzt. Im Text auftauchende Anlagenparameter werden kursiv gedruckt. Weitere Formalisierungen des Inhalts eines Situationskästchens gibt es nicht. Die Verbindung von Situationen und Aktivitäten zur Formulierung der situationsbedingten Auslösung oder Beendung von Aktivitäten entsteht aus der graphischen Verbindung beider Symbole 43, 47. Situationstypen für das Beginnen einer Aktivität werden am oberen Ende, Situationstypen für das Vollenden am unteren Ende eines Aktivitätskästchens 43 integriert.

Das Bestreben, eine Übersicht über die Gestalt des Tatigkeitsverlaufs zu vermitteln, verlangt jedoch mehr als diese Konstrukte. Es müssen Verbindungen zwischen Aktivitäts- und Situationskästchen gezogen werden, um dem Operateur ihre typischen Aufeinanderfolge sichtbar zu machen. Erst dadurch bekommt die Tätigkeitsbeschreibung mittels Aktionsdiagrammen ein "Gesicht''. Für die Verbindungen werden Pfeile 53 gewählt, d.h. Linien mit einem Pfeilkopf an einem Ende. Der Pfeilkopf zeigt die Richtung des Tatigkeitsverlaufs an. Hat man einen Pfeil erst einmal an seiner Basis betreten, kann man ihn ohne weiteres bis zu seinem Kopf verfolgen. Die Basis des Pfeils kann damit sinnvollerweise an Situationskastchen und am unteren oder seitlichen Rand eines Aktionskästchens ansetzen. Pfeilköpfe deuten auf Situationskästchen 47 oder auf den oberen Rand von Aktionskästchen 43. Da ständig neue Handlungsstränge hinzukommen oder wegfallen können, benötigen Aktionsdiagramme auch Symbole, Handlungsstränge 50 sozusagen "aus dem Nichts" zu produzieren und 49 "in das Nichts" zu konsumieren. Hierfür dienen Nichts-Stellen 50 bzw. 49, die durch schwarze Halbkreise symbolisiert werden und an denen ohne weiteres neue Handlungsstränge einsetzen bzw. enden können. Ein schwarzer Halbkreis 50 mit auslaufendem Pfeil bedeutet, daß man an dieser Stelle jederzeit mit einem neuen Handlungsstrang einsetzen kann. Ein schwarzer Halbkreis 49 mit einlaufendem Pfeil zeigt, daß man an dieser Stelle angekommen, die Bearbeitung dieses Handlungsstrangs einstellt. Die dritte Möglichkeit, Nichts-Stellen zu verwenden, bieten die Seiten von Aktivitätskästchen 43. Verläßt man das Kästchen über eine Nichts-Stelle 48 an der Basis eines Pfeils 53, dauert die Bearbeitung der verlassenen Aktivität fort und ein neuer Handlungsstrang beginnt parallel dazu. Ist dagegen keine Nichts-Stelle vorhanden, muß die Bearbeitung der verlassenen Aktivität abgebrochen werden.

Zum Umgang mit parallel verlaufenden Handlungssträngen sind weitere Symbole notwendig. Für die Auslösung paralleler Handlungsstränge benötigt man allerdings kein Symbol: Man läßt einfach beliebig viele Pfeile von der gewünschten Stelle (meist an der Unterkante eines Aktivitäts- oder Situationstypkästchens) ausgehen. Für die Beschreibung der Auslösung alternativer Handlungsstränge von einer Stelle nutzen Aktionsdiagramme eine kleine Raute 44. Ein mit einem Pfeil in die obere Spitze einlaufender Handlungsstrang teilt sich in alternative Stränge, indem von den restlichen Spitzen bzw. bei Bedarf von den unteren Kanten Pfeile auslaufen. Analog ist die Konstruktion bei der Zusammenführung von Handlungssträngen. Die einfache Zusammenführung von Handlungssträngen wird dadurch realisiert, daß die entsprechenden Handlungsstränge einfach in der gewünschten Stelle zusammenlaufen (meist an der Oberkante eines Aktivitäts- oder Situationstypkastchens). Trifft ein Handlungsstrang an dieser Stelle ein, kann dort sofort fortgesetzt werden. Die synchronisierte Zusammenführung von Handlungssträngen erhält ein auf der Spitze stehendes gleichschenkliges Dreieck (nicht dargestellt). Der aus der unteren Spitze des Dreiecks austretende Handlungsstrang kann im Sinne einer Und-Bedingung nur betreten werden, wenn alle an der oben liegenden Basis eintretenden Handlungsstränge eingetroffen sind. Das Symbol für die Formulierung zeitlicher Aspekte des Tätigkeitsverlaufs komplettiert die Definition von Aktionsdiagrammen: ein analoges Zifferblatt 52. Dieses Symbol erfüllt einen doppelten Zweck. Einmal dient es zur Definition von Zeitpunkten, d.h. wenn man dieses Symbol passiert, ist der dabei genannte Zeitpunkt eingetreten. Zum anderen erlaubt es, wenn man es mit Situationstypkästchen assoziiert, Zeitschranken in Handlungssträngen aufzubauen, die man nur zu den genannten Zeiten passieren kann. Zur Definition eines Zeitpunkts setzt man an den rechten Rand des Ziffernblatts ein kleines Rechteck 55 mit abgerundeten Ecken an. In das Rechteck 55 schreibt man den Namen des Zeitpunkts. Zur Beschreibung einer Zeitschranke setzt man das Symbol an die Oberkante eines Situationstypkästchens 47.

Es kann vorkommen, daß zum Verlassen einer Aktivität ein Situationstyp eine Rolle spielt, der bereits an der Stelle aufgezeichnet ist, an der der Tätigkeitsverlauf danach fortzusetzen wäre. Um Duplizierung zu vermeiden, kann man "Unter-Vorbehalt-Symbole" oder Statthalter-Symbole 45 für Situationstypen an der unteren Kante (bei Vollenden der Aktivität) oder 45a an der rechten Seite (bei Abbrechen der Aktivität) anbringen. Diese Symbole 45, 45a haben die Wirkung, als wenn die Situationstypen, mit denen sie über einen Pfeil verbunden sind, an ihrer Stelle stunden. Die Aktivität kann man nur über ein "Statthalter-Symbol" verlassen, wenn auch der damit 'angeknüpfte' Situationstyp die aktuelle Situation klassifiziert.

Die Erfindung ist auf das dargestellte Ausführungsbeispiel des Verfahrens und des zugehörigen leittechnischen Systems nach der Erfindung nicht beschränkt, vielmehr ist sie auch mit großem Vorteil anwendbar
- beim Einsatz von einen komplexen industriellen Prozeß simulierenden digitalen Rechenprogrammen (Simulatoren) und
- bei der Ausbildung von Wartenpersonal (auch im Off-line-Betrieb).

## Patentansprüche

1. Verfahren zum Steuern, Überwachen und Regeln eines Prozesses in einer industriellen Anlage, insbesondere eines komplexen industriellen Prozesses, wie Betriebsführung in einer Störfallsituation bei einem Kernkraftwerk, bei dem
a) Automaten (3), die als Rechenprogramm realisiert sind, und/oder Operateure mit Sensoren und Stellgliedern, die an den Prozeß angekoppelt sind und Prozeßinformation beschaffen bzw. den Prozeß beeinflussen, wechselwirken;
b) in einem Protokoll (6') Informationen gesammelt werden, wie sich die Werte von Prozeßparametern entwickeln und welche Aktionen von den Automaten (3) und den Operateuren (2') ausgelöst werden, das heißt, daß sowohl die Historie des Verhaltens des Prozesses als auch die Historie der Aktionen im Protokoll festgehalten werden;
c) eine Menge von Spezifikationen bereitgestellt wird, die
c1) angeben, welche Aktionen (4', EB1) für welche Typen (5.1') von Situationen geeignet sind ausgelöst zu werden, wobei die Typen (5.1') auf die Historie des Prozesses und/oder auf die Historie der Aktionen Bezug nehmen, und
c2) jeweils eine Menge (9') von Verweisen auf Informationen zur Durchführung der Aktionen (4',EB1) enthalten, welche an die Automaten (3) bzw. Operateure (2') gerichtet sind;
d) in einer Vergleichseinheit (7) die genannten Typen (5.1) von Situationen mit der durch das jeweilige Protokoll (6') gegebenen aktuellen Situation verglichen werden, und festgestellt wird, ob die gegebene Situation (6') einem Typ (5.1') entspricht, und daraus Aktionsmöglichkeiten abgeleitet werden.

2. Verfahren nach Anspruch 1,
**dadurch gekennzeichnet**, daß
a) das Protokoll (6') aus Ereignissen, die durch Notieren von Aktionen entstehen, aufgebaut wird;
b) durch die in den Ablaufbeschreibungen (5', 40) enthaltenen Situationstypen (5.1') Mengen von Bedingungen miteinander logisch verknüpft werden, die jeweils auf das Vorhandensein eines Typs von Ereignis im Protokoll (6') abheben bzw. einen solchen Typ definieren;
c) die Vergleichseinheit (7) zu jeder Bedingung eines Situationstyps (5.1') das Vorhandensein des dadurch beschriebenen Ereignistyps im Protokoll (6') überprüft und unter Verwendung der logischen Verknüpfungen der Bedingungen automatisch Aussagen über die Möglichkeit entsprechender Aktionen in der durch das Protokoll (6') vorgegebenen aktuellen Situation trifft; und
d) an die Durchführungsinformationen (9') ergänzende Hintergrundinformationen (10') so angeknüpft sind, daß die Automaten (3) oder Operateure (2') ausgehend von den Durchführungsinformationen (9') die Hintergrundinformationen (10') erreichen.

3. Verfahren nach den Ansprüchen 1 oder 2,
**dadurch gekennzeichnet**, daß Informationen für die Operateure (2') über die in einer vorgegebenen aktuellen Situation von der Vergleichseinheit (7) festgestellten Aktionsmöglichkeiten (8') mit Hilfe von Aktionsdiagrammen, die den Verlauf einer Tätigkeit grafisch beschreiben, dargestellt werden (Fig. 11).

4. Verfahren nach einem der Ansprüche 1 bis 3,
**gekennzeichnet durch** seine Verwendung für die Prozeßführung eines Kraftwerks, insbesondere eines Kernkraftwerks, indem
a) die on-line verfügbaren, relevanten Sensordaten über Automaten (3) in das Protokoll (6') eingespeist werden;
b) die gespeicherten Durchführungs- und ggf. Hintergrundinformationen (9', 10') den Inhalt eines vollwertigen Betriebs-Handbuchs der durch die Spezifikationen der Aktivitäten abgesteckten Tätigkeit der Automaten (3) und Operateure (2') abdecken.

5. Verfahren nach einem der Ansprüche 1 bis 4,
**dadurch gekennzeichnet**, daß zur Durchführung einer Tätigkeit durch mehrere Automaten (3) und/oder Operateure (2') jeder Automat (3) über eine Datenleitung und jeder der beteiligten Operateure (2') über eine Arbeitsstation (Tastatur, Maus, Bildschirm oder Spracheingabe- und -ausgabegeräte) mit den anderen Automaten (3) und/oder Operateuren (2') koordiniert wird, d.h. Angaben über von ihnen ausgelöste Aktionen in das gemeinsame Protokoll (6') eingespeist oder gespeicherte Informationen abgerufen werden, so daß die Operateure (2') und/oder Automaten (3) gegenseitig über jeweils für sie relevante Aktionsmöglichkeiten in Kenntnis gesetzt werden.

6. Verfahren nach einem der Ansprüche 1 bis 5,
**dadurch gekennzeichnet**, daß das Protokoll (6) mit einer nach Notizzeitpunkten geordneten Liste von Ereignissen (Figur 4) aufgebaut wird.

7. Verfahren nach Anspruch 6, **dadurch gekennzeichnet,** daß jedes Ereignis (Figur 4) insbesondere mit folgenden Einträgen versehen wird: Zeitpunkt (21), zu dem das Ereignis im Protokoll notiert wurde; Zeitraum (22), in dem das Ereignis stattgefunden hat; Operateur bzw. Automat (2', 3) oder allgemein: Agent (23), der die Aktion ausgelöst hat und das Ereignis notieren ließ; Aktivität (24), zu der die Aktion gehört; Phase (25), in die die Durchführung der Aktivität getreten ist und den Typ der Aktion wiedergibt; Anlagenparameter (26), zu dem die Aktivität ggf. eine Erkenntnis gewonnen hat; Wert des Parameters (27), der durch die Aktion gefunden wurde; ggf. Kommentar (28), den der Operateur oder Automat (2', 3) zur Auslösung der Aktion gegeben hat.

8. Verfahren nach Anspruch 6 oder 7, **dadurch gekennzeichnet,** daß der jeweilige Situationstyp (5.1') durch eine Menge aussagelogisch miteinander verknüpfter Bedingungen (29, 30; B1-B5) definiert wird und jede dieser Bedingungen aus zwei Teilen (P1', P3') besteht, einem Identifikationsteil (31, 32; P1') und einem Qualifikationsteil (31a, 34; P3'), wobei jeder Teil eine Menge von Prädikaten enthält, die jeweils einen Typ von Ereignis definieren.

9. Verfahren nach Anspruch 8, **dadurch gekennzeichnet,** daß durch Vergleichseinheit (7) mit den im Identifikationsteil (31, 32; P1') einer Bedingung aufgeführten Prädikaten, die einen Typ von Ereignis definieren, die dem Ereignistyp entsprechenden Ereignisse (El, E2) aus dem Protokoll (6') herausgefiltert werden, daß von diesen Ereignissen das zeitlich letzte (E2) isoliert wird und daß das isolierte Ereignis (E2) mit den im Qualifikationsteil (31a, 34; P3') der Bedingung (33, 34; B3) aufgeführten Prädikaten daraufhin überprüft, ob es dem dadurch definierten Ereignistyp entspricht sowie bei Entsprechung die Bedingung mit 'zutreffend' (wahr) und bei Nichtentsprechung mit 'nicht zutreffend' (falsch) markiert wird.

10. Verfahren nach einem der Ansprüche 1 bis 9,
**dadurch gekennzeichnet**, daß eine Aktivität (Figur 7) mit den Durchführungsphasen (35) "unbearbeitet", "Angepackt", "Erkannt" sowie "Vollendet" oder "Kompensiert" oder "Abgebrochen" assoziiert wird, wobei die Situationen, in denen die Übergänge zwischen den Phasen Unbearbeitet → Angepackt, Erkannt → Vollendet und Angepackt bzw. Erkannt → Abgebrochen stattfinden können, jeweils durch Situationstypen (5.1') charakterisiert werden und diese Situationstypen zu einer Ablaufbeschreibung (5', 40) gebündelt der Spezifikation der Aktivität angefügt werden.

11. Verfahren nach Anspruch 10, **dadurch gekennzeichnet,** daß die Aktionen zu Übergängen zwischen den Durchführungsphasen (35) in das Protokoll eingetragen werden und daß ein "Erkannt"-Ereignis in das Protokoll (6') mit einer Beschreibung des aktuellen Zustands des aktuellen Werts des Anlagenparameters (39), wie er durch die Aktivität gewonnen wurde, eingetragen wird.

12. Verfahren nach einem der vorangegangenen Ansprüche 1 bis 11, **dadurch gekennzeichnet,** daß in der Spezifikation einer Aktivität eine komplexere Aktivität (37) und/oder eine Menge von Detailaktivitäten (38) angegeben werden können.

13. Verfahren nach Anspruch 4, **dadurch gekennzeichnet**, daß
a) eine Menge von Spezifiktionen für Aktivitäten vorgesehen wird, die
a1) sowohl Aktivitäten einer sogenannten "ereignis-orientierten" Vorgehensweise repräsentieren, bei der der Tätigkeitsablauf sich durch ein Flußdiagramm wiedergeben läßt und sich im wesentlichen auf die Aktionshistorie abstützt (Fig.2),
a2) als auch Aktivitäten einer sogenannten "schutzziel-orientierten" Vorgehensweise repräsentieren, bei der der Tätigkeitsablauf sich durch eine Anlagenzustände und jeweils als Reaktion darauf geeignete Aktivitäten verknüpfende Tabelle wiedergeben läßt und sich im wesentlichen auf die Anlagenhistorie abstützt (Fig.3),
b) die den Spezifikationen der Aktivitäten zugeordneten Ablaufbeschreibungen (5'; 40) den "ereignis-orientierten" bzw. "schutzziel-orientierten" Tätigkeitsablauf modellieren,
c) und die den Spezifikationen der Aktivitäten zugeordneten Durchführungsinformationen (9') bzw. damit verknüpfte Hintergrundinformationen (10'), insbesondere den Inhalt sogenannter "ereignis-orientierter" bzw. "schutzziel-orientierter" Kernkraftwerks-Betriebshandbücher enthalten und dem Operateur (2') auch off-line zur Informationssuche zugänglich sind.

14. Leittechnisches System mit Anzeigeeinrichtung, zum Steuern, Überwachen und Regeln eines Prozesses in einer industriellen Anlage, insbesondere eines komplexen industriellen Prozesses, wie einer Betriebsführung in einer Störfallsituation bei einem Kernkraftwerk, unter Verwendung wenigstens eines digitalen Computers, durch dessen Rechenprogramm sogenannte Automaten (3) gebildet werden, wobei
a) die Automaten (3) mit Sensoren und Stellgliedern, die an den Prozeß angekoppelt sind und Prozeßinformation beschaffen bzw. den Prozeß beeinflussen, wechselwirken;
b) ein erster Datenspeicher eines Protokoll-Moduls (6) eingangsseitig zur Dateneingabe mit den Automaten (3) und mit einer Ein-/Ausgabeeinheit (2) für Operateure und ausgangsseitig über eine Datenleitung (13.1) mit einer Vergleichseinheit (7) verbunden ist, wobei das Protokoll-Modul (6) zur Sammlung von Informationen eingerichtet ist, wie sich die Werte der Prozeßparameter entwickeln und welche Aktionen von den Automaten (3) und Operateuren ausgelöst werden, d.h. zum Protokollieren der Historie des Verhaltens des Prozesses und der Historie der Aktionen;
c) ein zweiter Datenspeicher (5) zum Einspeichern einer Menge von Spezifikationen für Ablaufbeschreibungen bzw. Typen von Situationen ausgangsseitig ebenfalls mit der Vergleichseinheit (7) verbunden ist, wobei die Spezifikationen jeweils eine Ablaufbeschreibung enthalten und durch diese Ablaufbeschreibung definiert ist, welche Aktionen in welchen Typen von Situationen geeignet sind ausgelöst zu werden;
d) die Vergleichseinheit (7) mit Mitteln zum Vergleichen der Typen von Situationen aus dem zweiten Datenspeicher (5) mit der vom Protokoll-Modul (6) protokollierten aktuellen Situation versehen ist, zum Vergleichen der Typen sowohl mit der Historie des Verhaltens des Prozesses als auch mit der Historie der Aktionen der Automaten (3) und der Operateure und damit zum Feststellen, ob die aktuelle Situation einem der Typen entspricht sowie ob sich daraus Aktionsmöglichkeiten ergeben.

15. System nach Anspruch 14, **dadurch gekennzeichnet,** daß ein dritter, mit den Automaten (3) und der Eingabeeinheit (2) für die Operateure (2') kommunizierender Datenspeicher (9) eine Menge von Informationen zur Durchführung von Aktivitäten, sogenannte Durchführungsinformationen (9'), enthält, welche von den Operateuren (2') und Automaten (3) über Verweise anwählbar und auf Sichtgeräten der Anzeigeeinrichtung für die Operateure (2') darstellbar bzw. über eine Datenleitung für die Automaten (3) verfügbar sind.

16. System nach Anspruch 14 oder 15, **dadurch gekennzeichnet**, daß mit dem zweiten Datenspeicher (5) für Ablaufbeschreibungen (5'; 40) bzw. Situationstypen (5.1') ein vierter Datenspeicher (4) für situationsabhängig auszuführende Aktivitäten kommuniziert oder integriert ist.

17. System nach Anspruch 16, **dadurch gekennzeichnet**, daß der Inhalt "Aktivitäten" des vierten Datenspeichers (4) zusätzlich zu Spezifikationen von "Aktivitäten" auch "Teil-Objekte", "Gerät-Objekte" und "Materialobjekte" enthält, wobei "Teil-Objekte" formale Spezifikationen von Teilen der Anlage, "Gerät-Objekte" formale Spezifikationen von für die Durchführung von Aktivitäten notwendigen Geräten und "Material-Objekte" formale Spezifikationen von während der Durchführung von Aktivitäten zu verbrauchenden Materialien darstellen und diese jeweils mit erläuternden Informationen im Datenspeicher (10) gekoppelt sind (Fig. 9).

18. System nach den Ansprüchen 16 und 17, **dadurch gekennzeichnet,** daß ein fünfter Datenspeicher (10) für ergänzende Information (10') mit dem dritten Datenspeicher (9) für die Durchführungsinformation (9') kommuniziert oder mit diesem integriert ist.

19. System nach einem der Ansprüche 14 bis 18,
**dadurch gekennzeichnet**, daß ein sechster Datenspeicher (8) für Aktionsmöglichkeiten über eine Ausgangsdatenleitung (14) der Vergleichseinheit (7) mit dieser verbunden oder integriert ist und daß die für die Operateure (2') und Automaten (3) vorgesehenen Aktionsmöglichkeiten auf einem Bildschirm darstellbar bzw. über eine Datenleitung abrufbar sind.

## Claims

1. A method of controlling, monitoring and regulating a process in an industrial plant, in particular a complex industrial process such as plant management in a malfunction situation in a nuclear power plant wherein
a) robots (3) provided as a computation program and/or operators interact with sensors and actuators which are coupled to the process and which provide process information and influence the process;
b) information about how the values of process parameters develop and which actions are triggered by the robots (3) and the operators (2') are collected in a log (6'), i.e. both the history of the performance of the process and the history of the actions are recorded in the log;
c) a set of specifications is made available which
c1) indicate which actions (4', EB1) are suitable to be triggered for which types (5.1') of situations, the types (5.1') referring to the history of the process and/or to the history of the actions and
c2) in each case contain a set (9') of references to information for the execution of the actions (4', EB1) which are directed to the robots (3) or operators (2');
d) in a comparator unit (7) the stated types (5.1) of situation are compared with the current situation indicated by the respective log (6') and it is ascertained whether the given situation (6') corresponds to a type (5.1') and action possibilities are derived therefrom.

2. A method according to Claim 1, characterised in that
a) the log (6') is constructed from events which arise as a result of the noting of actions;
b) by means of the situation types (5.1') contained in the sequence descriptions (5', 40), sets of conditions are logically coupled to one another, which conditions refer to the presence of a type of event in the log (6') or define such a type;
c) for each condition of a situation type (5.1') the comparator unit (7) checks for the presence in the log (6') of the event type thus described and, using the logic couplings of the conditions, automatically makes statements about the possibility of corresponding actions in the current situation predetermined by the log (6'); and
d) supplementary background information (10') is linked to the execution information (9') in such manner that the robots (3) or operators (2') reach the background information (10') commencing from the execution information (9').

3. A method according to Claims 1 or 2, characterised in that information for the operators (2') about the action possibilities (8') ascertained by the comparator unit (7) in a predetermined current situation are represented with the aid of action diagrams which graphically describe the course of a task (Figure 11).

4. A method according to one of Claims 1 to 3, characterised by its use for the process control of a power plant, in particular a nuclear power plant, in that
a) the relevant sensor data available on-line is fed into the log (6') via robots (3);
b) the stored execution information and optionally background information (9', 10') encompass the contents of a high-quality operational handbook on the tasks of the robots (3) and operators (2') demarcated by the specifications of the activities.

5. A method according to one of Claims 1 to 4, characterised in that for the execution of a task by a plurality of robots (3) and/or operators (2'), each robot (3) is coordinated via a data line and each of the participating operators (2') is coordinated via a workstation (keyboard, mouse, screen or speech input and output devices) with the other robots (3) and/or operators (2'), i.e. indications of actions triggered by these are fed into the common log (6') or stored information is called up so that the operators (2') and/or robots (3) can mutually inform one another of action possibilities relevant to them.

6. A method according to one of Claims 1 to 5, characterised in that the log (6) is built up with a list of events classified in accordance with notation times (Figure 4).

7. A method according to Claim 6, characterised in that each event (Figure 4) is provided in particular with the following entries: time (21) at which the event was noted in the log; time period (22) in which the event took place; operator or robot (2', 3) or in general terms agent (23) who/which has triggered the action and caused the event to be noted; activity (24) with which the action is associated; phase (25) in which the execution of the activity has occurred and which reproduces the type of the action; plant parameter (26) about which the activity has possibly gained knowledge; value of the parameter (27) which has been found by the action; optionally commentary (28) given by the operator or robot (2', 3) on the triggering of the action.

8. A method according to Claim 6 or 7, characterised in that the respective situation type (5.1') is defined by a set of conditions (29, 30; B1-B5) coupled with one another in accordance with propositional logic and each of these conditions consists of two parts (P1', P3'), an identification part (31, 32,; P1') and a qualification part (31a, 34; P3'), where each part contains a set of predicates which each define a type of event.

9. A method according to Claim 8, characterised in that by means of the comparator unit (7), with the predicates which are listed in the identification part (31, 32; P1') of a condition and which define a type of event, the events (E1, E2) corresponding to the event type are filtered out of the log (6'), that of these events the most recent (E2) is isolated, and that the isolated event (E2) is checked with the predicates listed in the qualification part (31a, 34, P3') of the condition (33, 34; B3) to determine whether it corresponds to the event type thus defined and in the event of correspondence the condition is marked with "correct" (true) and in the event of non-correspondence it is marked with "incorrect" (false).

10. A method according to one of Claims 1 to 9,
characterised in that an activity (Figure 7) is associated with the execution phases (35) "not done", "started", "recognised" or "completed" or "compensated" or "discontinued", where the situations in which the transitions between the phases, not done → started, recognised → completed and started or recognised → discontinued can take place are in each case characterised by situation types (5.1') and these situation types are attached to the specification of the activity bundled into a sequence description (5', 40).

11. A method according to Claim 10, characterised in that the actions are entered in the log at transitions between the execution phases (35) and that a "recognised" event is entered in the log (6') with a description of the current status of the current value of the plant parameter (39) as obtained by means of the activity.

12. A method according to one of the preceding Claims 1 to 11, characterised in that a more complex activity (37) and/or a set of detail activities (38) can be indicated in the specification of an activity.

13. A method according to Claim 4, characterised in that
a) a set of specifications for activities is provided which
a1) both represent activities of a so-called "event-orientated" procedure, where the task sequence can be reproduced by a flow diagram and is essentially based on the action history (Figure 2),
a2) and also represent activities of a so-called "safeguard-oriented" procedure, where the task sequence can be reproduced by a table linking plant statuses and activities suitable as reactions thereto and is essentially based on the plant history (Figure 3),
b) the sequence descriptions (5'; 40) assigned to the specifications of the activities model the "event-oriented" or "safeguard-oriented" task sequence,
c) and the execution information (9'), which is assigned to the specifications of the activities or background information (10') linked thereto, contains in particular the contents of so-called "event-oriented" and "safeguard-oriented" nuclear power plant operational handbooks and is accessible to the operator (2') also off-line for information search purposes.

14. A management system with a display device for controlling, monitoring and regulating a process in an industrial plant, in particular a complex industrial process such as plant management in a malfunction situation in a nuclear power plant, using at least one digital computer the computation program of which forms so-called robots (3), wherein
a) the robots (3) interact with sensors and actuators which are coupled to the process and which obtain process information and influence the process;
b) a first data memory of a log module (6) is connected at its input for data entry to the robots (3) and to an input/output unit (2') for operators and is connected at its output via a data line (13.1) to a comparator unit (7), which log module (6) is set up to collect information about how the values of the process parameters develop and which actions are triggered by the robots (3) and operators, i.e. to log the history of the performance of the process and the history of the actions;
c) a second data memory (5) for storing a set of specifications for sequence descriptions and types of situations is likewise connected at its output to the comparator unit (7), said specifications each containing a sequence description and said sequence description defining which actions are suitable to be triggered in which types of situations;
d) the comparator unit (7) is provided with means for comparing the types of situations from the second data memory (5) with the current situation logged by the log module (6), for comparing the types both with the history of the performance of the process and with the history of the actions of the robots (3) and the operators, and thus for ascertaining whether the current situation corresponds to one of the types and whether action possibilities result therefrom.

15. A system according to Claim 14, characterised in that a third data memory (9), which communicates with the robots (3) and the input unit (2) for the operators (2'), contains a set of information for the execution of activities, so-called execution information (9'), which can be called up by the operators (2') and robots (3) via references and can be displayed on viewing equipment of the display device for the operators (2') and are available via a data line to the robots (3).

16. A system according to Claim 14 or 15, characterised in that a fourth data memory (4) for activities to be executed in situation-dependent manner communicates with or is integrated with the second data memory (5) for sequence descriptions (5'; 40) and situation types (5.1').

17. A system according to Claim 16, characterised in that the "activities" content of the fourth data memory (4) contains, in addition to specifications of "activities", also "partial objects", "device objects" and "material objects", where "partial objects" represent formal specifications of parts of the plant, "device objects" represent formal specifications of devices required for the execution of activities, and "material objects" represent formal specifications of materials to be used during the execution of activities and these are in each case coupled with explanatory information in the data memory (10) (Figure 9).

18. A system according to Claims 16 and 17,
characterised in that a fifth data memory (10) for supplementary information (10') communicates with or is integrated with the third data memory (9) for the execution information (9').

19. A system according to one of Claims 14 to 18, characterised in that a sixth data memory (8) for action possibilities is connected or integrated with the comparator unit (7) via an output data line (14) of said comparator unit, and that the action possibilities provided for the operators (2') and robots (3) can be displayed on a screen or called up via a data line.

## Revendications

1. Procédé pour gérer, contrôler et réguler un processus dans une installation industrielle, notamment un processus industriel complexe, telle la gestion d'exploitation en cas d'accident dans une centrale nucléaire, dans lequel
a) des automates (3), qui sont réalisés sous forme de programmes de calcul, et/ou des opérateurs interagissent avec des capteurs et des organes de réglage, qui sont couplés au processus et procurent de l'information sur le processus ou influencent le processus ;
b) des informations sur la façon dont évoluent les valeurs de paramètres de processus et sur la nature des actions déclenchées par les automates (3) et les opérateurs (2') sont rassemblées dans un protocole (6'), c'est-à-dire et l'historique du comportement du processus et l'historique des actions sont enregistrées dans le protocole;
c) une quantité de spécifications est mise à disposition, qui
c1) indiquent quelles actions (4', EB1) pour quels types (5.1') de situation sont aptes à être déclenchées, les types (5.1') se référant à l'historique du processus et/ou à l'historique des actions, et
c2) contiennent chacune une quantité (9') de renvois à des informations permettant l'exécution des actions (4', EB1), qui s'adressent aux automates (3) ou aux opérateurs (2');
d) dans une unité de comparaison (7), lesdits types (5.1') de situation sont comparés avec la situation actuelle donnée par le protocole (6') respectif, pour déterminer si la situation donnée (6') correspond à un type (5.1') et pour en déduire les possibilités d'action.

2. Procédé selon la revendication 1, caractérisé en ce que
a) le protocole (6') est constitué à partir d'événements qui résultent de l'inscription d'actions ;
b) en raison des types de situation (5.1') contenus dans les descriptions de déroulement (5', 40), des quantités de conditions mettant chacune l'accent sur l'existence d'un type d'événement dans le protocole (6') ou définissant un tel type, sont liées logiquement entre elles ;
c) pour chaque condition d'un type de situation (5.1'), l'unité de comparaison (7) vérifie l'existence du type d'événement ainsi décrit dans le protocole (6') et, en utilisant les liaisons logiques entre les conditions, se prononce automatiquement sur la possibilité d'actions adéquates dans la situation actuelle donnée par le protocole (6') ; et
d) une information de fond (10') complémentaire est liée aux informations d'exécution (9'), de sorte que les automates (3) ou les opérateurs (2') atteignent les informations de fond (10') à partir des informations d'exécution (9').

3. Procédé selon la revendication 1 ou 2, caractérisé en ce que les informations pour les opérateurs (2') sur les possibilités d'actions (8') déterminées par l'unité de comparaison (7) dans une situation actuelle donnée sont représentées à l'aide de diagrammes d'action qui décrivent graphiquement le déroulement d'une action (figure 11).

4. Procédé selon l'une des revendications 1 à 3, caractérisé par son utilisation pour la gestion d'un processus dans une centrale, en particulier une centrale nucléaire, dans lequel
a) les données des capteurs pertinentes et disponibles en ligne sont entrées dans le protocole (6') par l'intermédiaire d'automates (3) ;
b) les informations d'exécution et, le cas échéant, de fond (9', 10') enregistrées couvrent le contenu d'un manuel d'utilisation complet de l'action des automates (3) et des opérateurs (2') définie par les spécifications des activités.

5. Procédé selon l'une des revendications 1 à 4, caractérisé en ce que pour exécuter une action par plusieurs automates (3) et/ou opérateurs (2'), chaque automate (3) communique via une ligne de données et chacun des opérateurs (2') participants via un terminal de travail (clavier, souris, écran ou unité d'entrée ou de sortie vocale) avec les autres automates (3) et/ou opérateurs (2'), c'est-à-dire les indications sur les actions déclenchées par eux sont entrées dans le protocole commun (6') ou les informations stockées en mémoire sont appelées, de sorte que les opérateurs (2') et/ou les automates (3) sont informés mutuellement des possibilités d'actions utiles pour eux.

6. Procédé selon l'une des revendications 1 à 5, caractérisé en ce que le protocole (6) est construit à partir d'une liste d'événements (figure 4) classée selon les instants d'inscription.

7. Procédé selon la revendication 6, caractérisé en ce que chaque événement (figure 4) est muni en particulier des inscriptions suivantes : l'instant (21) auquel l'événement a été inscrit dans le protocole ; la période (22) dans laquelle l'événement a eu lieu ; l'opérateur ou l'automate (2', 3) ou, de façon générale, l'agent (23) qui a déclenché l'action et a fait inscrire l'événement ; l'activité (24) à laquelle appartient l'action ; la phase (25) dans laquelle est entrée l'exécution de l'activité et qui indique le type de l'action ; le paramètre (26) de l'installation par rapport auquel l'activité est parvenue le cas échéant à une conclusion ; la valeur (27) du paramètre qui a été trouvée par l'action ; le cas échéant le commentaire (28) donné par l'opérateur ou l'automate (2', 3) pour déclencher l'action.

8. Procédé selon la revendication 6 ou 7, caractérisé en ce que chaque type de situation (5.1') est défini par une quantité de conditions (29, 30 ; B1 - B5) liées entre elles selon une logique propositionnelle, et chacune de ces conditions est composée de deux parties (P1', P3'), une partie d'identification (31, 32 ; Pl') et une partie de qualification (31a, 34 ; P3'), chaque partie contenant une quantité de prédicats qui définissent chacun un type d'événement.

9. Procédé selon la revendication 8, caractérisé en ce que par l'unité de comparaison (7) avec les prédicats indiqués dans la partie d'identification (31, 32 ; P1') d'une condition, qui définissent un type d'événement, les événements (E1, E2) correspondant au type d'événement sont filtrés du protocole (6'), en ce que parmi ces événements le dernier dans le temps (E2) est isolé et en ce que l'événement isolé (E2) avec les prédicats cités dans la partie de qualification (31a, 34 ; P3') de la condition (33, 34 ; B3) est vérifié pour savoir s'il correspond au type d'événement ainsi défini, et en cas de correspondance, la condition est identifiée par 'pertinente' (vrai) et en cas de non correspondance, de 'non pertinente' (faux).

10. Procédé selon l'une des revendications 1 à 9, caractérisé en ce qu'une activité (figure 7) est associée aux phases d'exécution (35) "non traité", "abordé", "reconnu" et "accompli" ou "compensé" ou "abandonné", les situations, dans lesquelles les passages entre les phases non traité → abordé, reconnu → accompli et abordé ou reconnu → abandonné peuvent avoir lieu, étant caractérisées chacune par des types de situation (5.1'), et ces types de situation étant joints en bloc à la spécification de l'activité en vue d'une description de déroulement (5', 40).

11. Procédé selon la revendication 10, caractérisé en ce que les actions de passage entre les phases d'exécution (35) sont enregistrées dans le protocole et en ce qu'un événement "reconnu" est enregistré dans le protocole (6'), accompagné d'une description de l'état actuel de la valeur actuelle du paramètre (39) de l'installation, tel qu'il a été obtenu par l'activité.

12. Procédé selon l'une des revendications précédentes 1 à 11, caractérisé en ce qu'une activité plus complexe (37) et/ou une quantité d'activités individuelles (38) peuvent être indiquées dans la spécification d'une activité.

13. Procédé selon la revendication 4, caractérisé en ce que
a) une quantité de spécifications est prévue pour les activités, qui
a1) représentent non seulement les activités d'une procédure dite "orientée événement", laquelle permet de reproduire le déroulement de l'activité par un organigramme et s'appuie essentiellement sur l'historique des actions (figure 2),
a2) mais qui représentent aussi les activités d'une procédure dite "orientée objectif protection", laquelle permet de reproduire le déroulement de l'activité par une table associant les états de l'installation et, en réaction à ceux-ci, les activités appropriées et s'appuie essentiellement sur l'historique de l'installation (figure 3),
b) les descriptions de déroulement (5' ; 40) associées aux spécifications des activités modélisent le déroulement de l'activité "orienté événement" ou "orienté objectif protection",
c) et les informations d'exécution (9') associées aux spécifications des activités, ou les informations de fond (10') qui y sont liées, contiennent notamment le contenu de manuels d'utilisation pour une centrale nucléaire dits "orientés événement" ou orienté "objectif protection" et sont mises à la disposition de l'opérateur (2'), même hors ligne, pour la recherche d'information.

14. Système de commande automatique avec dispositif d'affichage, pour gérer, contrôler et réguler un processus dans une installation industrielle, notamment un processus industriel complexe, telle que la gestion de l'exploitation en cas d'accident dans une centrale nucléaire, en utilisant au moins un ordinateur numérique dont le programme de calcul permet de former des "automates" (3), dans lequel
a) les automates (3) interagissent avec des capteurs et des organes de réglage qui sont couplés au processus et procurent de l'information sur le processus ou influencent le processus ;
b) une première mémoire de données d'un module de protocole (6) est reliée côté entrée, pour entrer les données, aux automates (3) et à une unité d'entrée/de sortie (2) pour les opérateurs, et côté sortie, via une ligne de données (13.1), à une unité de comparaison (7), le module de protocole (6) étant configuré pour rassembler des informations sur la façon dont évoluent les valeurs des paramètres du processus et sur la nature des actions déclenchées par les automates (3) et les opérateurs, c'est-à-dire pour enregistrer l'historique du comportement du processus et l'historique des actions ;
c) une deuxième mémoire de données (5) permettant d'enregistrer une quantité de spécifications pour les descriptions de déroulement ou les types de situations est reliée côté sortie également à l'unité de comparaison (7), les spécifications contenant chacune une description de déroulement et grâce à cette description de déroulement étant défini quelles actions dans quels types de situations sont aptes à être déclenchées ;
d) l'unité de comparaison (7) est pourvue de moyens permettant de comparer les types de situation de la deuxième mémoire de données (5) avec la situation actuelle enregistrée par le module de protocole (6), de comparer les types et avec l'historique du comportement du processus et avec l'historique des actions des automates (3) et des opérateurs et donc de constater si la situation actuelle correspond à l'un des types et si des possibilités d'action en découlent.

15. Système selon la revendication 14, caractérisé en ce qu'une troisième mémoire de données (9) communiquant avec les automates (3) et l'unité d'entrée (2) pour les opérateurs (2') contient une quantité d'informations pour exécuter des activités, appelées informations d'exécution (9'), lesquelles peuvent être sélectionnées par les opérateurs (2') et les automates (3) par l'intermédiaire de renvois et représentées sur des unités de visualisation du dispositif d'affichage pour les opérateurs (2') ou être mises à disposition des automates (3) par l'intermédiaire d'une ligne de données.

16. Système selon la revendication 14 ou 15, caractérisé en ce qu'une quatrième mémoire de données (4) réservée aux activités à exécuter en fonction de la situation communique avec la deuxième mémoire de données (5) réservée aux descriptions de déroulement (5'; 40) ou types de situations (5.1') ou est intégrée dans celle-ci.

17. Système selon la revendication 16, caractérisé en ce que le contenu "activités" de la quatrième mémoire de données (4) contient en plus des spécifications "activités" également des "objets pièce", des "objets appareil" et des "objets matériau", les "objets pièce" représentant des spécifications formelles de pièces de l'installation, les "objets appareil" des spécifications formelles d'appareils nécessaires à l'exécution des activités et les "objets matériau" des spécifications formelles de matériaux à consommer pendant l'exécution des activités, et celles-ci étant à chaque fois liées avec des informations explicatives dans la mémoire de données (10) (Figure 9).

18. Système selon les revendications 16 et 17, caractérisé en ce qu'une cinquième mémoire de données (10) réservée à une information complémentaire (10') communique avec la troisième mémoire de données (9) réservée à l'information d'exécution (9') ou est intégrée dans celle-ci.

19. Système selon l'une des revendications 14 à 18, caractérisé en ce qu'une sixième mémoire de données (8) réservée aux possibilités d'action est reliée, par l'intermédiaire d'une ligne de données de sortie (14) de l'unité de comparaison (7), avec celle-ci ou est intégrée dans celle-ci, et en ce que les possibilités d'action pour les opérateurs (2') et les automates (3) peuvent être représentées sur un écran ou être appelées via une ligne de données.
